# EUROPEAN PATENT SPECIFICATION

(11) **EP 3 907 644 B1**
(45) Date of publication and mention of the grant of the patent: **05.10.2022**
(21) Application number: 20275088.1
(22) Date of filing: 07.05.2020
(51) Int. Cl.: G06F 21/64

(54) **BLOCKCHAIN**
BLOCKCHAIN
CHAÎNE DE BLOCS

(43) Date of publication of application: 10.11.2021
(73) Proprietor: Cambridge Cryptographic Ltd, London EC1V 2NX (GB)
(72) Inventor: CHAN, Ying, Cambridge, CB1 3FB (GB); FLETCHER, John, London, EC1V 2NX (GB)
(74) Representative: Cozens, Paul Dennis

(56) References cited:
- WO-A1-2019/034959
- WO-A1-2019/116184
- JOACHIM ZAHNENTFERNER: "Chimeric Ledgers: Translating and Unifying UTXO-based and Account-based Cryptocurrencies", IACR, INTERNATIONAL ASSOCIATION FOR CRYPTOLOGIC RESEARCH , vol. 20180312:115852 11 March 2018 (2018-03-11), pages 1-11, XP061025406, Retrieved from the Internet: URL:http://eprint.iacr.org/2018/262.pdf [retrieved on 2018-03-11]

## Description

### Field of invention

The present invention relates to a computer-implemented method of configuring an Unspent Transaction Output (UTXO) blockchain. The method is in particularly, but not exclusively, applicable to configuring the UTXO blockchain in order to emulate an account model blockchain.

### Background

A blockchain is an electronic ledger on which data can be stored. Specifically, a blockchain comprises a plurality of blocks, with each block containing its own list of one or more records. Each block also contains a cryptographic hash of the previous block so that there exists an unbroken link running through the entirety of the blockchain, with each block referring to the preceding block. Modifying any of the constituent blocks of the blockchain affects the cryptographic hash, so that any modification of a past block is immediately apparent.

Each block of the blockchain comprises a number of records, where each block typically comprises transactions between entities on the blockchain. In order for a transaction to be included in a block and added to the blockchain this transaction must be validated. Validation comprises checking that the transaction meets certain requirements. As an example, in typical implementations of blockchains an amount of a digital asset is locked based on a public key; in order to unlock and spend this digital asset an entity must provide proof that they hold a corresponding private key. The testing of this proof forms a part of the validation process, where a transaction relating to the locked digital asset will not be validated until the requisite proof is provided. Once the transaction has been validated it can be included in a block which can be proposed, e.g. by a miner, for addition to the blockchain.

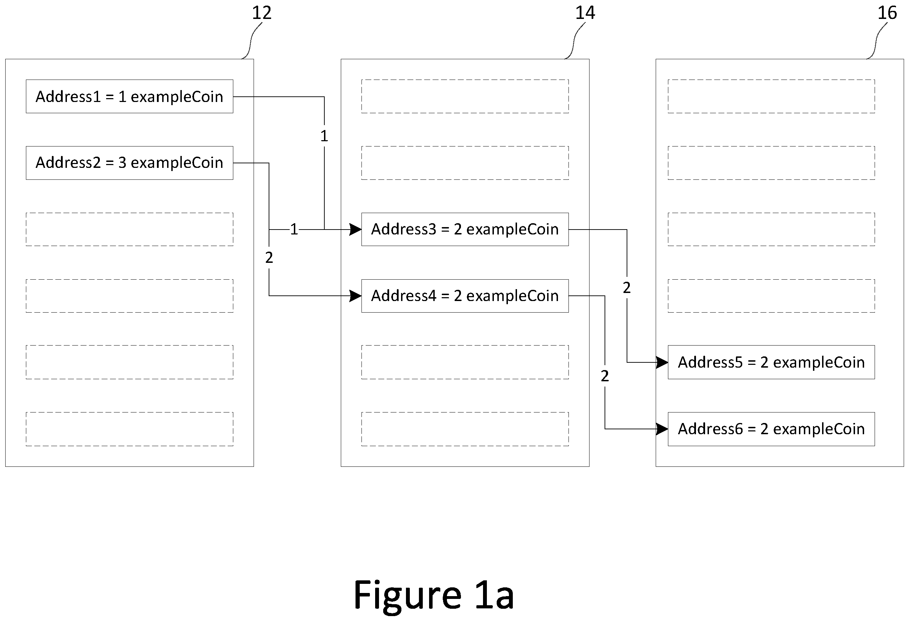

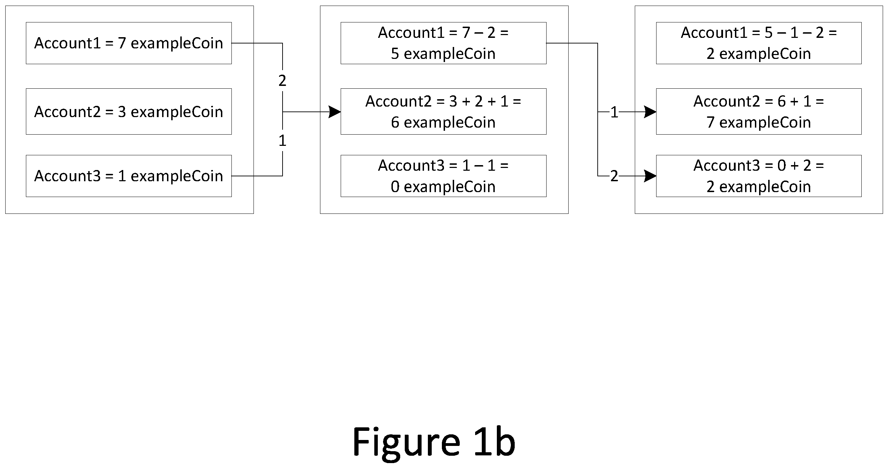

Transactions as described can be recorded in a number of ways depending on the implementation of the blockchain. Two methods for this are now described with reference to Figures 1a and 1b.

Referring to Figure 1a, in an Unspent Transaction Output (UTXO) model, as is used for example by Bitcoin, the fundamental unit is the UTXO. At its simplest, a UTXO records an amount of digital asset and its owner. An entity, such as a user or a smart contract, might own a number of UTXOs, with the sum of the UTXOs forming the entity's total holdings of the digital asset. In order to aggregate various UTXOs, entities can use a wallet, which contains a reference to multiple UTXOs.

In order to transfer between entities an amount of the digital asset relating to a UTXO, a locking script is generated, where this locking script relates to the UTXO. In order to spend the digital asset associated with this UTXO, the receiving entity must provide a corresponding unlocking script. As an example, the locking script may be based on a public key provided by the receiving entity, and the unlocking script may be based on a corresponding private key held only by the receiving entity.

A transaction in a UTXO model consists of a set of inputs referencing existing UTXOs on the blockchain and a set of output UTXOs that are generated as part of the transaction. Each UTXO is single-use; once the UTXO has been referenced in an input it is 'consumed' - the entirety of the digital asset referenced by that UTXO is transferred to other UTXOs and the UTXO is removed from the memory pool (the list of UTXOs stored for the blockchain).

Each block of the blockchain contains a set of transactions relating to the consumption and generation of UTXOs. Typically, each UTXO is locked based on a different public key (where unlocking requires the provision of a proof of a corresponding private key). Since the public keys do not contain any identifying information, it is not trivial, and indeed often not possible, to determine which entity holds each UTXO. Furthermore, it is difficult to link any set of UTXOs to identify that those UTXOs are held by the same entity.

The UTXO model offers privacy, since users are able to use a different public key for each UTXO, and scalability, since the UTXO transactions are computationally lightweight and a large number of UTXO transactions can be executed in parallel in each block of the blockchain. However, as explained above, since each UTXO is single use it is difficult to maintain a record of which UTXOs are held by any given entity.

Referring to Figure 1b, in an account model, as is used for example by Ethereum, the fundamental unit is an account, which records one or more states, e.g. a value, linked to the account. An entity typically owns a single account, which persists as long as that entity does not terminate it.

A transaction in an account model typically consists of a reference to a payer account, a reference to a payee account, and a change in the state of the account.

The miners of an account blockchain determine the next state of the blockchain by: taking the current state of the blockchain; collating a set of transactions into a block; and applying the state transitions of each transaction to calculate the next state. It is this state that is recorded on the blockchain.

Since accounts can persist over multiple blocks, e.g. accounts can be referenced multiple times, the account model is more readily capable of handling smart contracts. However, forming the blocks from transactions is computationally intensive, leading to poor scalability and security when compared to the UTXO model.

The differences between UTXO and account models are further explained in "Comparing Bitcoin & Ethereum: UTXO vs Account Based Transaction Models", Curran, B. (2018) -
https://blockonomi.com/utxo-vs-account-based-transaction-models.

WO 2019/116184 A1 discloses computer implemented methods that create and/or validate a spending blockchain transaction that includes i) a plurality of locking scripts each representing an instance of an execution thread (which can be execution threads that are forked from an execution thread represented by a locking script of a previous blockchain transaction and/or execution threads of at least one previous blockchain transaction that are managed and/or controlled for inter-thread communication and control) or ii) a locking script representing an instance of an execution thread joined from a plurality of execution threads represented at least one previous blockchain transaction.

WO 2019/034959 A1 discloses distributed ledger technologies such as consensus-based blockchains, for example, a Bitcoin blockchain. Computer-implemented methods for a trustless, deterministic state machine that is embodied by the locking script of a spending transaction are described.

### Summary of the Disclosure

Aspects and embodiments of the present invention are set out in the appended claims. These and other aspects and embodiments of the invention are also described herein.

According to least one aspect of the present disclosure, there is described a computer-implemented method of configuring an Unspent Transaction Output, UTXO, blockchain so that upon a spending transaction being received at a node for validation prior to inclusion in a block of the UTXO blockchain, the node: determines the presence of an identifier in an input of the spending transaction; and validates the spending transaction only when the same identifier is also present in an output of the spending transaction; wherein the identifier comprises a unique identifier.

In this way, the method provides a persistent identifier that is present in both the input and the output of the spending transaction. This enables emulation of an account using the UTXO blockchain. In particular, the presence of the identifier allows operation relating to a single account (e.g. a single entity or person) to be carried out even when the UTXO on which the account is based has been consumed.

Preferably the identifier relates to an account.

Preferably, the identifier comprises a unique identifier. The identifier being unique may comprise the identifier being different to the identifier for every other account. There may be a plurality of identifiers, with each unique identifier relating to a different account. This may be a one to one relationship, in that each account in only identified by one identifier. Alternatively, each account may be identified by multiple unique identifiers.

The identifier may be present in more than one spending transaction. Alternatively, different spending transactions may include a different identifier relating to the same account. In this scenario, the different identifiers relating to the same account may be linked to one another. In other words, an account may be uniquely identified by multiple identifiers, e.g. in each spending transaction, with the multiple identifiers being related or linked to one another. Since the multiple identifiers are linked, the account can still be identified (e.g. by identifying the presence of the link); this link is the identifier.

Preferably, determining the presence of an identifier in an input of the spending transaction comprises determining the presence of an identifier in the output of a previous transaction, which output of the previous transaction is referenced by the input of the spending transaction.

Preferably, the identifier being present in an output comprises the identifier being present in a locking script of said output.

Preferably, the value of the identifier is dependent on one or more past transactions.

Preferably, the method further comprises validating the spending transaction in dependence on the presence of a locking script in an output of the spending transaction,

Preferably, a locking script of the output of the spending transaction constrains a subsequent transaction to include the identifier in an output of said subsequent transaction.

Preferably, the locking script constrains the output of said subsequent transaction that contains the identifier to have an index that is the same as an index of an input of the subsequent transaction that references the output of the spending transaction that contains the locking script.

Preferably, the locking script further constrains the subsequent transaction to include the identifier in at least one of: an output, and a locking script of an output of the subsequent transaction.

Preferably, the locking script constrains the subsequent transaction to include the identifier in only a single output, and/or a locking script of only a single output of the subsequent transaction.

Preferably, the locking script constrains the subsequent transaction to include in an unlocking script information relating to the subsequent transaction. Preferably, the locking script constrains the subsequent transaction to include in an unlocking script a copy of the subsequent transaction.

Preferably, the locking script constrains an unlocking script of the subsequent transaction to execute one or more functions. Preferably, the functions are dependent upon further inputs and/or outputs of the subsequent transaction.

Preferably, the locking script compares an expected value to a value obtained by the execution of one or more functions.

Preferably, the identifier comprises a subscript that is present in the output of the spending transaction.

Preferably, the presence of the identifier is determined by evaluating a value of the output, wherein the value relates to the identifier.

Preferably, the value of the output is dependent on the value of a previous output.

Preferably, the value of the output is dependent on the value of a genesis value, the genesis value being determined at the time of creation of the account.

Preferably, the value of the output depends on a feature of the block being added to the blockchain, preferably a sequence number of the block or another block of the blockchain.

Preferably, the value of the output depends on a hashing function.

Preferably, the presence of the same identifier is determined by evaluating a hash of the identifier. Preferably, the hash of the identifier depends on a genesis value which is thereafter hashed repeatedly.

Preferably, the identifier is also present in an input and/or output of a transaction in a previous block of the blockchain.

Preferably, the identifier is present in a locking script of the output of the spending transaction.

Preferably, the method further comprises associating a function and/or a state with the identifier.

Preferably, validating the spending transaction involves determining the presence of a locking script that requires a subsequent unlocking script to reference the identifier.

Preferably, validating the spending transaction involves determining the presence of a locking script that requires a subsequent locking script to comprise the identifier.

Preferably, validating the spending transaction involves determining the presence of an identifier sub-script in the locking script of the output of the spending transaction.

Preferably, validating the spending transaction involves determining the presence of the identifier in only a single output of the spending transaction.

Preferably, validating the spending transaction involves determining the presence of the identifier in an output with an index that is the same as an index of the input containing the identifier.

Preferably, the method further comprises generating an identifier if there is no identifier present in the input. Preferably, the generation of the identifier depends on a feature of at least one of: the spending transaction; the block containing the spending transaction; a previous transaction; the block containing the previous transaction; an immediately previous transaction that is referenced by an input of the spending transaction; and the block containing the immediately previous transaction; a secondary previous transaction that is referenced by an input of the immediately previous transaction; and the block containing the secondary previous transaction.

Preferably, a function and/or a state relating to the input is replicated and/or updated in the output of the spending transaction.

Preferably, the method further comprises validating the spending transaction in dependence on a function. Preferably, the method further comprises validating the spending transaction in dependence on a function defined in a locking script related to the input of the spending transaction.

Preferably, the node executes a function, wherein the function is defined with reference to the identifier

According to another aspect of the present disclosure, there is described a computer-implemented method of configuring an Unspent Transaction Output, UTXO, blockchain so that upon a spending transaction being received at a node for validation prior to inclusion in a block of the UTXO blockchain, the node: determines the presence of an identifier in an input of the spending transaction; and executes a function, wherein the function is defined with reference to the identifier; wherein the identifier comprises a unique identifier.

Preferably, the method further comprises comparing a value included in an unlocking script to an expected value, the expected value being based determined using on the function. Preferably, the expected value is defined in a locking script of a previous transaction.

Preferably, the method further comprises determining the presence of the spending transaction in the unlocking script.

Preferably, the method further comprises determining a value relating to the spending transaction. Preferably, the value relating to the spending transaction is determined by executing the function using one or more parameters extracted from the spending transaction.

Preferably, the method further comprises comparing the determined value to an/the expected value, the expected value being referenced by a/the locking script. Preferably, the method comprises validating the transaction only if the determined value is the same as the expected value.

Preferably, the function is extracted from a/the locking script relating to the input based on a reference in an/the unlocking script relating to the input.

Preferably, one or more parameters to pass to the function are extracted from an/the unlocking script.

Preferably, the parameters are passed via reference to a UTXO.

Preferably, the method further comprises determining whether the function has already been executed. Preferably, the method further comprises determining whether the function has already been executed by evaluating a state relating to the identifier.

Preferably, the method further comprises updating a state relating to the identifier in order to indicate that the function has been executed.

Preferably, the method further comprises determining for an input set of parameters whether a function referencing the input set of parameters has already been executed, preferably by evaluating a state relating to the identifier.

Preferably, the method further comprises updating a state relating to the identifier in order to indicate that a function referencing an input set of parameters has been executed.

Preferably, the method comprises: executing a function based on a function definition relating to the identifier and one or more parameters in an/the unlocking script of the input.

Preferably, the method further comprises updating a state relating to the identifier upon execution of the function. Preferably, the state comprises an amount of a digital asset related to the identifier. Preferably, the method further comprises interpreting the function so as to execute the function based on capabilities of the blockchain.

Preferably, the method further comprises determining the presence of an identifier in an input and/or output against which the function is executed.

Preferably, the method further comprises executing a further function based on the execution of the function.

Preferably, the method further comprises updating a state relating to the identifier based on the execution of the function.

Preferably, the execution of the function depends on the presence of a further identifier. Preferably, the execution of the function requires the second identifier to also be referenced in an input of the spending transaction.

Preferably, the node executes a further function, where each of the function and the further function check for the presence of the identifier.

Preferably, the method further comprises including the spending transaction in a block to be proposed for inclusion in the UTXO blockchain.

According to another aspect of the present disclosure, there is described a computer-implemented method of validating a spending transaction prior to inclusion in a block of an Unspent Transaction Output, UTXO, blockchain, comprising: determining the presence of an identifier in an input of the spending transaction; and validating the spending transaction only when the same identifier is also present in an output of the spending transaction.

According to another aspect of the present disclosure, there is described a computer-implemented method of configuring an Unspent Transaction Output, UTXO, blockchain so that in order to validate a spending transaction for inclusion in the blockchain, it is required to: determine the presence of an identifier in an input of the spending transaction; and validate the spending transaction only when the same identifier is also present in an output of the spending transaction.

According to another aspect of the present disclosure, there is described a method of mining a block of an Unspent Transaction Output, UTXO, blockchain, wherein the block contains a spending transaction, and wherein an output of the spending transaction comprises an identifier that is the same as an identifier present in an input of the spending transaction.

According to another aspect of the present disclosure, there is described a blockchain comprising a block, wherein the block comprises at least one spending transaction, and wherein an output of the spending transaction comprises an identifier that is the same as an identifier present in the input of the spending transaction.

According to another aspect of the present disclosure, there is described a computer implemented device arranged to store and/or access the aforesaid blockchain.

According to another aspect of the present disclosure, there is described a method of presenting an output based on the spending transaction of the aforesaid blockchain.

According to another aspect of the present disclosure, there is described an apparatus for storing an Unspent Transaction Output, UTXO, blockchain, the apparatus comprising: means for storing a UTXO blockchain comprising a block, wherein the block comprises a spending transaction, and wherein an output of the spending transaction comprises an identifier that is the same as an identifier present in the input of the spending transaction.

The means for storing the blockchain may comprise a hard drive, a solid state drive, or a computer server.

Preferably, the apparatus comprises means for presenting a feature of the spending transaction.

The means for presenting may comprise a display or a loudspeaker.

According to least one aspect of the present disclosure, there is described an apparatus comprising: means for determining the presence of an identifier in an input of a spending transaction of a Unspent Transaction Output, UTXO, blockchain; and means for validating the spending transaction only when the same identifier is also present in an output of the spending transaction.

Preferably the apparatus comprises a computer device. Preferably the means for determining comprises a processor. Preferably, the means for validating comprises a processor.

Preferably the apparatus further comprises means for presenting information, such as a display or a speaker. Preferably, the apparatus is arranged to present information relating to the spending transaction and/or the UTXO blockchain, where the presentation of information may be in dependence on a user request and/or an event.

According to another aspect of the present disclosure, there is described an apparatus comprising: means for determining the presence of an identifier in an input of a spending transaction of an Unspent Transaction Output, UTXO, blockchain; and means for executes a function, wherein the function is defined with reference to the identifier.

Preferably the apparatus comprises a computer device. Preferably the means for determining comprises a processor. Preferably, the means for executing comprises a processor.

Preferably, the apparatus is arranged to communicate with at least one other apparatus. Preferably, the apparatus is arranged to transmit the validated spending transaction to another apparatus, e.g. using a communication interface.

Preferably, the apparatus is arranged to indicate that the spending transaction has been validated, for example via a display or via an indicator included within a transmission that contains and/or references the spending transaction.

According to least one aspect of the present disclosure, there is described a system comprising: a first apparatus comprising means for determining the presence of an identifier in an input of a spending transaction of a Unspent Transaction Output, UTXO, blockchain; means for validating the spending transaction only when the same identifier is also present in an output of the spending transaction; and means for transmitting the validated spending transaction to a second apparatus; and a second apparatus comprising means for receiving the validated spending transaction; and means for including the validated spending transaction in a block, which block is proposed for addition to the blockchain.

Preferably, the means for transmitting the validated spending transaction comprises a communication interface. Preferably, the means for receiving the validated spending transaction comprises a communication interface. Preferably, the means for including the validated spending transaction in a block comprises a processor.

Preferably, the first apparatus and the second apparatus comprise computer devices.

Preferably, the system comprises a plurality of apparatuses, the plurality of apparatuses being arranged to communicate with each other. Preferably, each of the plurality of apparatuses are arranged to propagate the validated spending transaction to at least one of the other apparatuses.

Preferably, a UTXO blockchain is a blockchain that comprises or references one or more Unspent Transaction Outputs (UTXOs) and/or implements the UTXO model.

The disclosure extends to any novel aspects or features described and/or illustrated herein.

Further features of the disclosure are characterised by the other independent and dependent claims.

Any feature in one aspect of the disclosure may be applied to other aspects of the disclosure, in any appropriate combination. In particular, method aspects may be applied to apparatus aspects, and vice versa.

Furthermore, features implemented in hardware may be implemented in software, and vice versa. Any reference to software and hardware features herein should be construed accordingly.

Any apparatus feature as described herein may also be provided as a method feature, and vice versa. As used herein, means plus function features may be expressed alternatively in terms of their corresponding structure, such as a suitably programmed processor and associated memory.

It should also be appreciated that particular combinations of the various features described and defined in any aspects of the disclosure can be implemented and/or supplied and/or used independently.

The disclosure also provides a computer program and a computer program product comprising software code adapted, when executed on a data processing apparatus, to perform any of the methods described herein, including any or all of their component steps.

The disclosure also provides a computer program and a computer program product comprising software code which, when executed on a data processing apparatus, comprises any of the apparatus features described herein.

The disclosure also provides a computer program and a computer program product having an operating system which supports a computer program for carrying out any of the methods described herein and/or for embodying any of the apparatus features described herein.

The disclosure also provides a computer readable medium having stored thereon the computer program as aforesaid.

The disclosure also provides a signal carrying the computer program as aforesaid, and a method of transmitting such a signal.

The disclosure extends to methods and/or apparatus substantially as herein described with reference to the accompanying drawings.

Embodiments of the disclosure are described below, by way of example only, with reference to the accompanying drawings.

### Brief Description of the Drawings

Figures 1a and 1b show models on which a blockchain can be based.
Figures 2 shows a blockchain on which the methods disclosed herein can be implemented.
Figure 3 shows a computer device on which the systems and methods disclosed herein may be implemented.
Figure 4 shows an exemplary transaction based on unspent transaction outputs (UTXOs).
Figures 5a - 5c illustrate the fields of the transaction.
Figure 6 is a flowchart for a method of validating a transaction based on the presence of a persistent identifier.
Figure 7 illustrates the unlocking of a UTXO.
Figure 8 shows a method of requiring an input of a transaction to contain information relating to the transaction.
Figure 9 illustrates a method of checking a transaction for the presence of a persistent identifier.
Figures 10, 11a, and 11b show methods of copying and methods of generating a persistent identifier.
Figure 12 illustrates a method of executing a smart contract.
Figure 13 shows an exemplary transaction that accounts for a smart contract.

### Detailed Description of the Embodiments

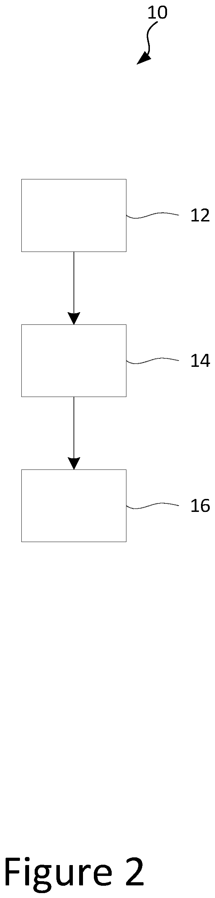

Referring to Figure 2, there is shown a blockchain 10. The blockchain 10 comprises a first block 12, a second block 14, and a third block 16, where the third block 16 is dependent on the second block 14 and the second block 14 is dependent on the first block 12, e.g. the third block 16 may reference a hash of the second block 14 and the second block 14 may reference a hash of the first block 12. Each of the blocks 12, 14, 16 contains a number of transactions, which reference unspent transaction outputs (UTXOs).

The methods and systems disclosed herein are applicable to the blockchain 10, where these methods and systems are useable, in particular, to validate transactions before these transactions are included in a block of the blockchain 10.

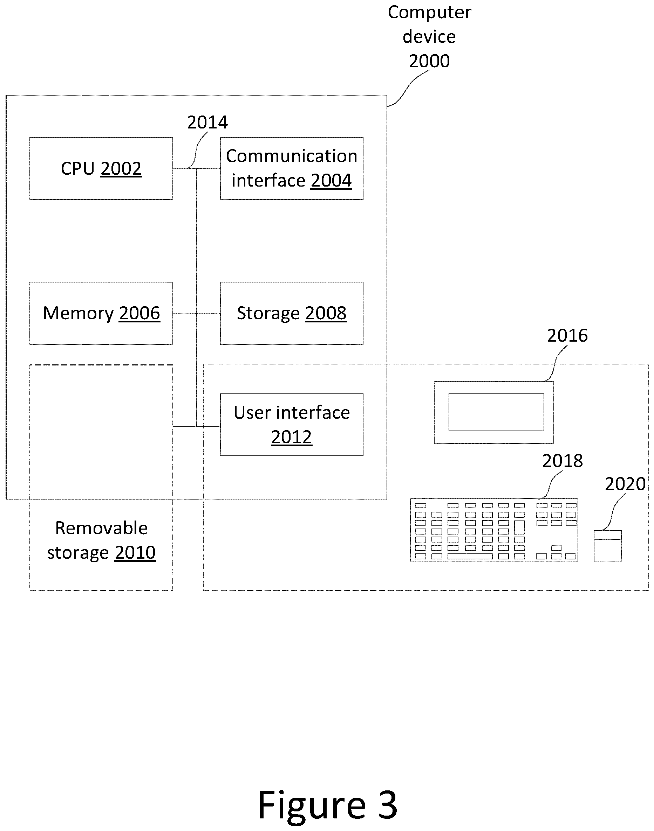

Referring to Figure 3, the blockchain 10 is configured, added to, and viewed using a computer device 2000. Each node, which nodes validate transactions, is implemented using such a computer device 2000. Similarly, each miner, which miners propose blocks for addition to the blockchain, is implemented using a computer device 2000. Nodes and miners may be implemented on the same computer device 2000.

Each computer device 2000 typically comprises a processor in the form of a CPU 2002, a communication interface 2004, a memory 2006, storage 2008, removable storage 2010 and a user interface 2012 coupled to one another by a bus 2014. The user interface 2012 comprises a display 2016 and an input/output device, which in this embodiment is a keyboard 2018 and a mouse 2020.

The CPU 2002 executes instructions, including instructions stored in the memory 2006, the storage 2008, and/or the removable storage 2010.

The communication interface 2004 is typically an Ethernet network adaptor coupling the bus 2014 to an Ethernet socket. The Ethernet socket is coupled to a network, such as the Internet. The communication interface 2004 facilitates communication between the nodes of the blockchain 10 and enables each node to validate and propagate transactions and each miner to propose blocks to the network. It will be appreciated that any other communication medium may be used by the communication interface 2004, such as area networks, infrared communication, and Bluetooth^{®}.

The memory 2006 stores instructions and other information for use by the CPU 2002. The memory 2006 is the main memory of the computer device 2000. It usually comprises both Random Access Memory (RAM) and Read Only Memory (ROM).

The storage 2008 provides mass storage for the computer device 2000. In different implementations, the storage 2008 is an integral storage device in the form of a hard disk device, a flash memory or some other similar solid state memory device, or an array of such devices. To run a full node of the blockchain 10, that is a node which contains the entirety of the blockchain 10, the storage 2008 is typically required to have a large capacity. Nodes are also capable of running partial nodes, where the node stores only a portion of the blockchain 10.

The removable storage 2010 provides auxiliary storage for the computer device 2000. In different implementations, the removable storage 2010 is a storage medium for a removable storage device, such as an optical disk, for example a Digital Versatile Disk (DVD), a portable flash drive or some other similar portable solid state memory device, or an array of such devices. In other embodiments, the removable storage 2010 is remote from the computer device 2000, and comprises a network storage device or a cloud-based storage device.

Each node and each miner uses a computer device 2000 to implement aspects of the methods and systems as described herein. Typically, the computer device 2000 used by each party is specialised; for example miners proposing blocks to be added to the blockchain 10 may use a computer device that comprises an application specific integrated circuit (ASIC) or that comprises one or more graphics processing units (GPUs). In some embodiments, the computer device 2000 comprises numerous racks of ASICs or GPUs with a single user interface, where the computer device 2000 may be wholly specialised for mining blockchains.

Typically the computer device 2000 of each node is arranged to receive transactions, to validate these transactions, and then to propagate the validated transactions throughout a network. The computer devices 2000 of the miners (which miners may also be nodes) are then able to collate a number of validated transactions into a block; this block can then be proposed for addition of to the blockchain 10. The addition of the proposed block to the blockchain 10 may rely on, for example, providing a proof-of-work (as occurs in e.g. Bitcoin: "Bitcoin: A Peer-to-Peer Electronic Cash System. Nakamoto, S. (2008) https://bitcoin.org/bitcoin.pdf") or providing a proof-of-stake (as occurs in e.g. Algorand: "ALOGRAND Chen, J. (2017) https://algorandcom.cdn.prismic.io/algorandcom%2Fece77f38-75b3-44de-bc7f-805f0e53a8d9 theoretical.pdf").

In an exemplary usage of the blockchain 10, a node validates a transaction and then provides the validated transaction to other nodes in the network; this enables these other nodes to include the validated transaction within a block that is proposed for addition to the blockchain 10. Once it is added to the blockchain 10, the validated transaction, or a blockchain comprising the validated transaction, can be presented to a user, where the information contained in the transaction can be used for a variety of purposes (e.g. to improve the design of machines, to ensure adherence to government regulations, or to identify risky or endangering behaviour).

A computer program product is provided that includes instructions for carrying out aspects of the method(s) described below. The computer program product is stored, at different stages, in any one of the memory 2006, storage device 2008 and removable storage 2010. The storage of the computer program product is non-transitory, except when instructions included in the computer program product are being executed by the CPU 2002, in which case the instructions are sometimes stored temporarily in the CPU 2002 or memory 2006. It should also be noted that the removable storage 2008 is removable from the computer device 2000, such that the computer program product may be held separately from the computer device 2000 from time to time. Different computer program products, or different aspects of a single overall computer program product, are present on the computer devices 2000 used by any given miner and/or user of the blockchain 10.

As has been described with reference to Figure 1a, in an unspent transaction output (UTXO) model each UTXO is single use. When the digital asset referenced by a UTXO is spent, the entirety of the holdings of the UTXO must be transferred to other UTXOs.

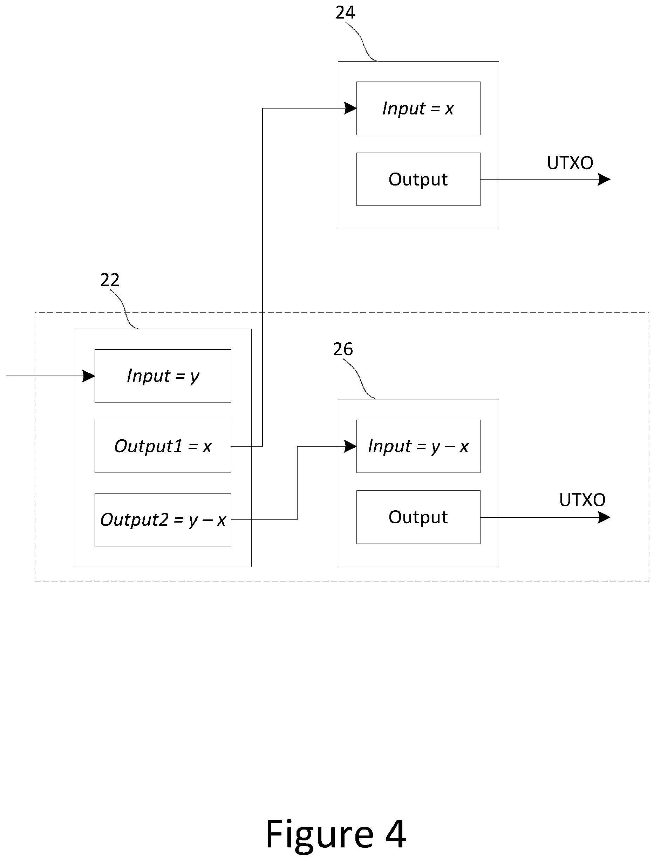

This is further illustrated with reference to Figure 4, in which a first party wishes to send an amount x to a second party in the form of a first transaction 22 that has an input amount y. More specifically, the input y of the first transaction 22 references an existing UTXO that relates to an amount y. As part of validating the transaction, the first transaction 22 is checked to ensure that *x* < *y*; this being the case, a UTXO relating to the amount x is generated so as to be useable for a second transaction 24 initiated by the second party. Another UTXO relating to the remaining amount *y* - *x* is also generated as a UTXO so as to be useable in a third transaction 26 initiated by the first party.

Typically, there is also a transaction fee payable (which transaction fee is paid to the miner who proposes the block containing the transaction), so that the remaining amount transferred is y- x-*transaction fee.* In some implementations, such as Bitcoin, any excess amount (i.e. any amount not specified in the transaction as being sent to the first party or the second party) is transferred to the miner.

In practice, each UTXO is typically locked based on a public key. The public key is made publicly available and a UTXO can then be associated with this public key by including the public key as part of a locking script. In this way a number of parties can send UTXOs to an entity by using the public key. In order to unlock the UTXOs associated with the public key so that the digital asset relating to these UTXOs can be transferred, a proof of ownership of the private key relating to the public key is required. Once this proof is supplied, the entire store of the digital asset held in relation to the address is transferred to other generated UTXOs. Even though a portion of this digital asset may be transferred to the party holding the private key, it is not possible to tell this merely from an examination of the blockchain.

In a practical example, Bob holds the private key of an address with five exampleCoin and he wishes to send two exampleCoin to an address for which Alice holds the private key, e.g. by referencing the public key of that address. Here Bob must transfer the remaining three exampleCoin to a further address for which he holds the private key. Hence the first transaction 22 defines the transfer of a first amount to a first blockchain address, which is held by Alice (this is the input of the second transaction 22), and the transfer of the remainder to a second blockchain address (this is the input of the third transaction 26), which is held by Bob.

While the first transaction 22 and the third transaction 26 are both initiated by the first party (Bob), this is not determinable simply from viewing the blockchain 10.

The present disclosure relates to a method of emulating an account on a UTXO blockchain. This enables the usage of more complex smart contracts than are otherwise possible on a UTXO blockchain.

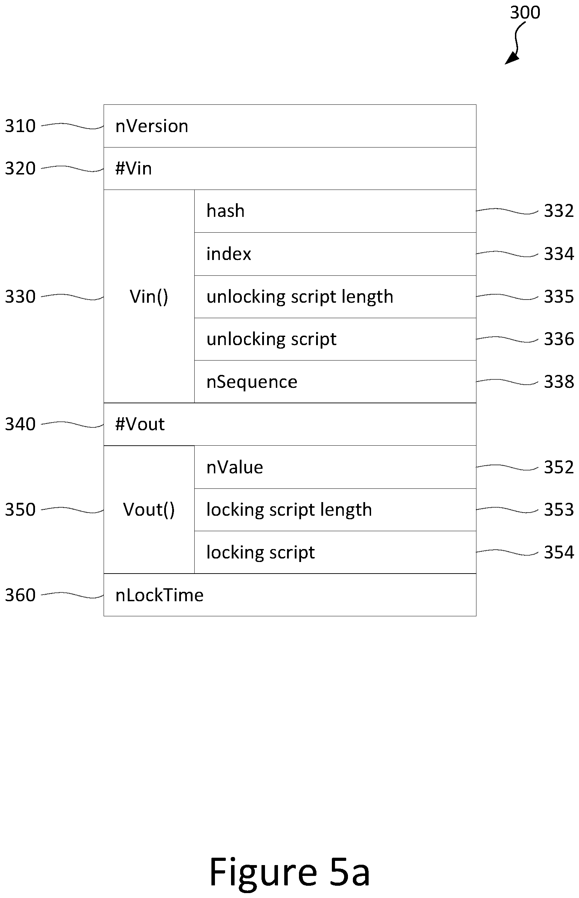

Referring to Figure 5a, an exemplary transaction 300 is shown in more detail.

The transaction, hereafter referred to as the 'self' transaction, 300 comprises a version number 310; a number of inputs 320; an input 330; a number of outputs 340; an 350; and a lock time 360.

The version number 310 indicates the transaction format version.

The number of inputs 320 indicates how many UTXOs are referenced by the self transaction 300. Using Figure 4 as an example, the number of inputs for the second transaction 24 will be one, since the only referenced UTXO is the output UTXO of the first transaction 22.

Each input 330 contains: a hash 332, an index 334, an unlocking script length 335, an unlocking script 336, and a sequence number 338.

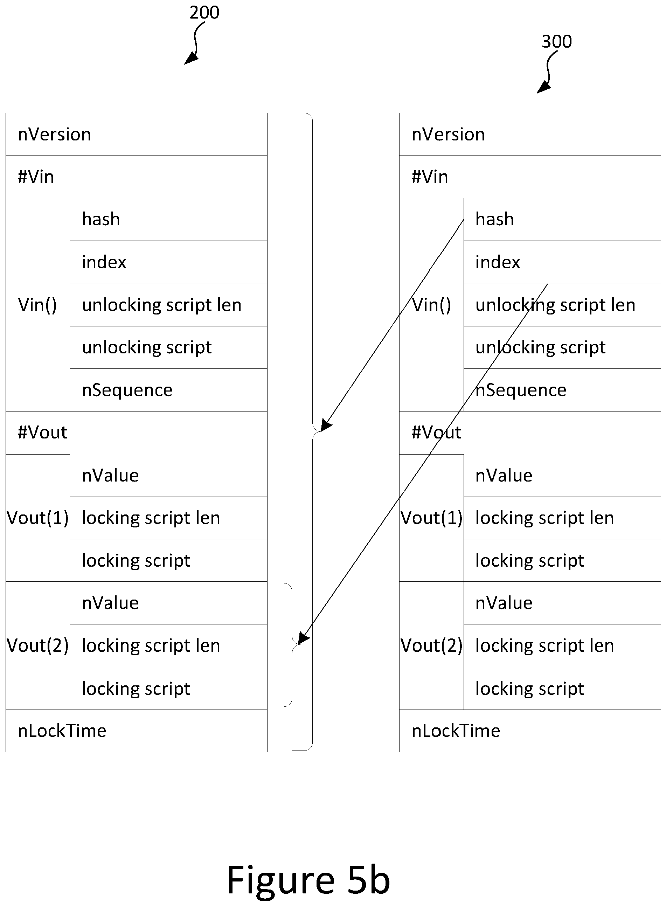

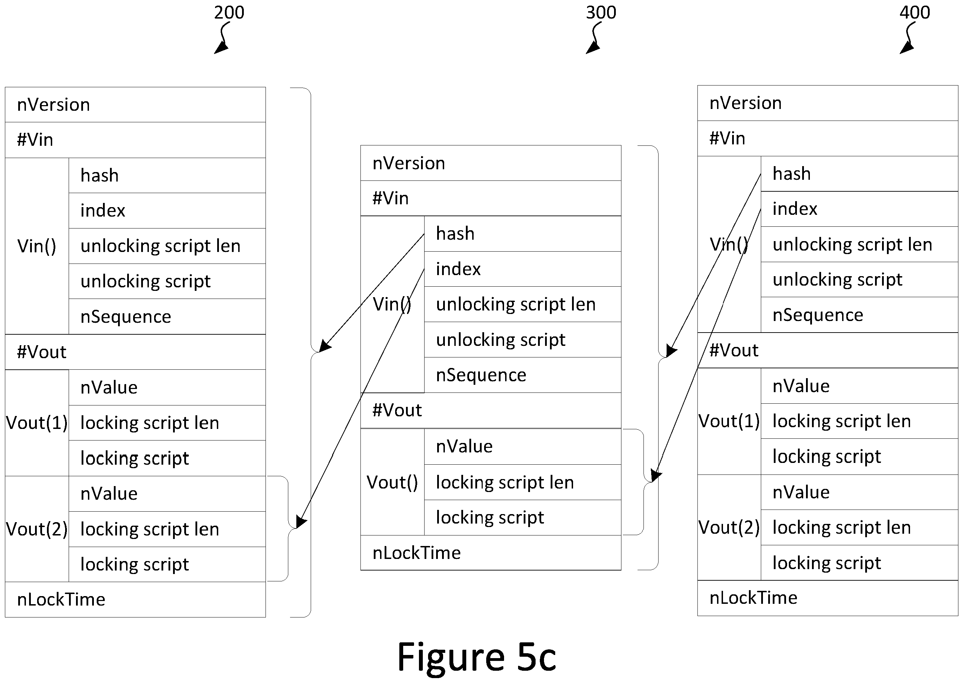

The hash 332 relates to a previous transaction. When a transaction is included in the block chain, it is hashed and can thereafter be referred to using the hash 332. The index 334 is related to a specific output in that transaction referred to by the hash 332. In practice, a transaction may comprise a plurality of inputs and/or outputs; the combination of the hash 332 and the index 334 enables the transaction 300 to refer to a specific output of a previous transaction. This is shown in Figures 5b and 5c, which show the self transaction 300 referring to a specific output of a previous, or 'input', transaction 200 via the hash 332 and index 334 fields as well as a future, or 'spending', transaction 400 referring to a specific output of the self transaction 300.

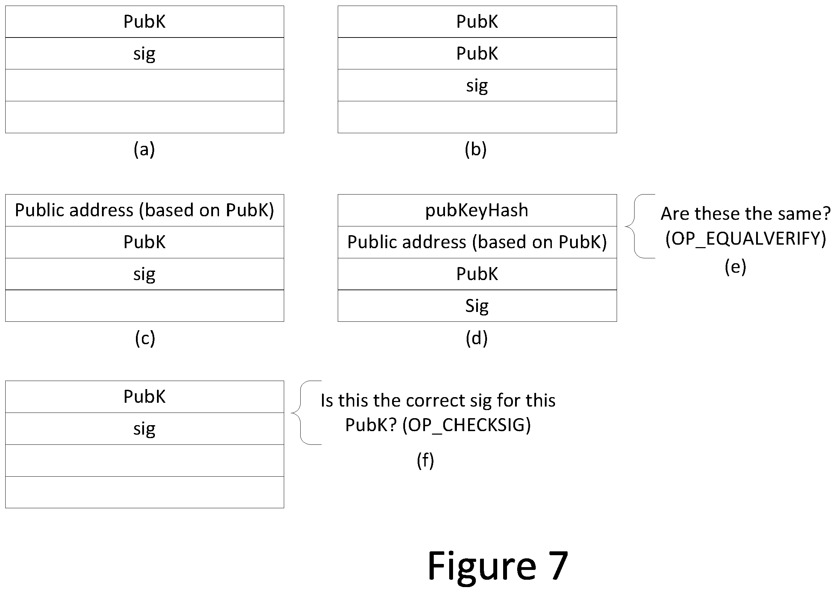

The unlocking script length 335 indicates the length of an unlocking script 336. The unlocking script 336 relates to a locking script of an output of a previous transaction, which output is referred to via the hash 332 and index fields 334. The unlocking script 336 typically comprises a proof of knowledge of a private key that relates to a public key included in the locking script of a previous output. This output (e.g. the UTXO) can only be unlocked and spent by providing the correct unlocking script 336. An exemplary implementation of the unlocking script 336 is described with reference to Figure 7.

The sequence number 338 relates to a time-lock, which indicates when the transaction 300 should be included in a block to be proposed by a miner.

The number of outputs 340 indicates how many outputs are included as part of the present transaction. Referring to the first transaction 22 of Figure 4, the number of outputs is two, since the first transaction 22 generates two UTXOs, with one UTXO being an input to the second transaction 24 and another UTXO being an input to the third transaction 26.

Each output 330 contains: a value 352, a locking script length 353, and a locking script 354.

The value 352 indicates the amount of the digital asset which is being transferred as part of the output. The locking script length 353 indicates the length of the locking 'key' 354. The locking script 354 locks the transaction, so that the output UTXO can only be spent when an appropriate unlocking script 336 is provided.

The lock time 360 indicates a time at which the self transaction 300 can (or must) be included in a block. This time is typically a lower limit and is typically defined in terms of a block or a unix time, where the lock time 360 may indicate an earliest block in which the self transaction 300 can be included 300. Typically, the lock time 360 is set to zero, which indicates that the transaction can be added to the blockchain immediately.

The outputs of the self transaction 300 relate to UTXOs that are included in the memory pool of the blockchain 10 when a block containing the self transaction 300 is added to the blockchain 10. The inputs of the self transaction 300 reference previous UTXOs that relate to the outputs of previous transactions. The UTXOs referenced in the self transaction 300 are 'consumed' and are removed from the memory pool of the blockchain 10 when a block containing the self transaction 300 is added to the blockchain 10.

In order to emulate an account model on a UTXO blockchain, the present disclosure considers the inclusion in the self transaction 300, typically in an output of the self transaction 300, of a persistent identifier (or 'persistent id'). This persistent id is replicated in the spending transaction 400, so that there exists a link between the self transaction 300 and the spending transaction 400.

In order to ensure the persistent id is replicated, there is typically a condition placed in the locking script 354 of the self transaction 300. The locking script 354 that locks an output of the self transaction 300 is able to specify conditions for the use of the locked output. In other words, the locking of the self transaction 300 may enforce conditions on the spending transaction 400 that is attempting to spend the output UTXOs generated by the self transaction 300. When an unlocking script is provided to unlock a UTXO, it must meet the constraints conferred by the locking script that locked the UTXO.

A method of implementing a persistent id using a locking script is now described. It will be appreciated that the method is more generally applicable to any component of a transaction that can impose limits upon the completion of that transaction.

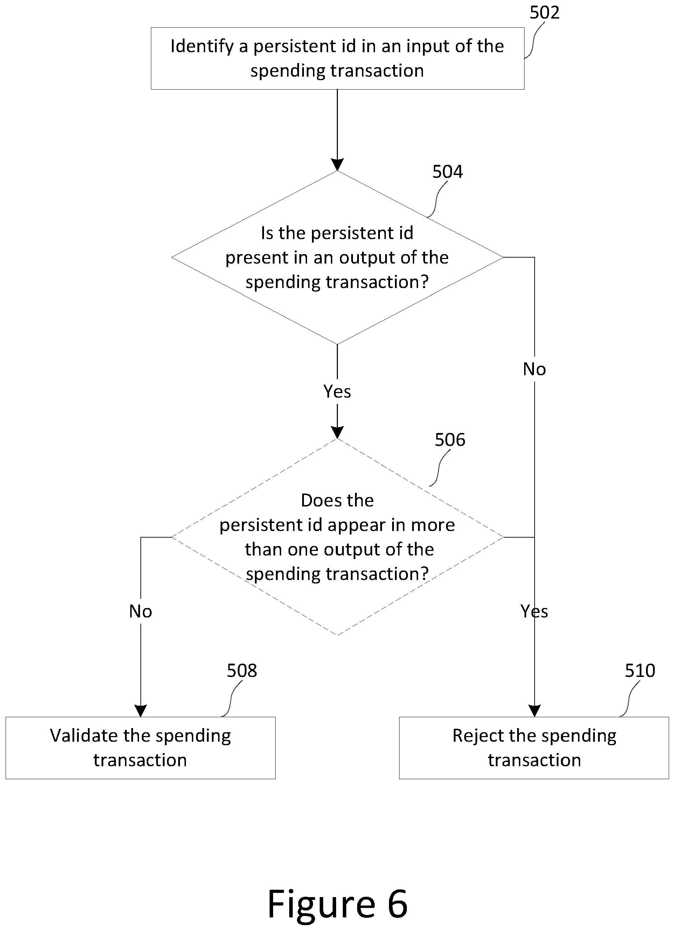

Referring to Figure 6, there is disclosed a locking script that imposes upon the corresponding unlocking script a need to, in a first step 502, determine whether an input of the spending transaction 400 references a persistent id. Typically, the inputs of the spending transaction 400 are references to UTXOs generated as part of previous transactions, e.g. as part of the self transaction 300. Therefore, determining whether an input of the spending transaction 400 references a persistent id typically comprises identifying an output of the self transaction 300 that is referenced by the input of the spending transaction 400 and identifying a persistent id (e.g. within the output) that relates to that output of the self transaction 300.

Where an input of the spending transaction 400 references a persistent id, in a second step 504 the unlocking script determines whether an output of the spending transaction 400 contains this same persistent id. Typically, this comprises checking the locking script of one or more of the outputs of the spending transaction 400 in order to ensure that the persistent id is present in at least one of the outputs.

In some embodiments, it is possible for more than one of the component transactions within the spending transaction 400 to contain the persistent id so that an account may be linked to by a plurality of transactions. However, typically it is desirable for only a single output to contain the persistent id to avoid ambiguity when referencing the persistent id.

Therefore, in an optional third step 506, it is checked whether any other output in the spending transaction 400 contains the same persistent id.

In a fourth step 508, if no other output of the spending transaction 400 contains the same persistent id, or if the third step 506 is not implemented, the self transaction 300 can be validated and thereafter proposed by a miner for addition to the blockchain 10. It will be appreciated that validation may also involve a number of other checks.

In an alternative fourth step 510, if the persistent id is not present in an output of the spending transaction 400, or if the persistent id is present in multiple outputs of the spending transaction 400, the spending transaction 400 is rejected.

The persistent id that is required to be included in an output enables the emulation of an account; since the id persists throughout the blockchain 10 (e.g. is present in a plurality of blocks). The output - and the emulated account - can be referenced using the persistent id.

The persistent id may be a constant value that is the same for each block of the blockchain 10. Alternatively, the value of the persistent id may change in each block, where the persistent id is based on an initial value. For example, the persistent id may be in the form of a hashed key, where this hashed key depends on a private key value and/or the current block and/or a previous block. The use of such a hashed key allows the persistent id to be verified by all parties (or by a subset of parties) with access to the blockchain 10, e.g. by reference to a public key. Malicious actors are precluded from emulating the persistent id since only the holder of the 'account', or in some embodiments no party, has access to the relevant private key. In embodiments where the persistent id changes (e.g. where the persistent id is hashed for each new block), it is still based on an initial value/identifier - therefore determining the presence of the persistent id can be considered to be identifying the presence of this unchanging initial value/identifier.

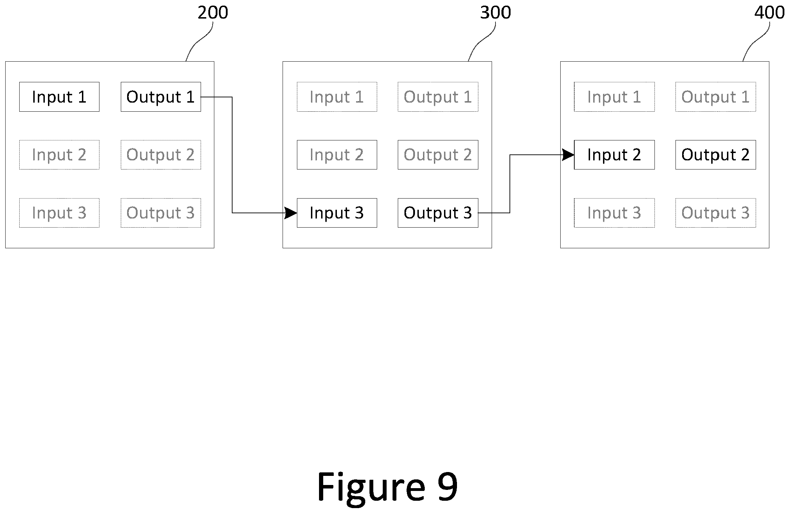

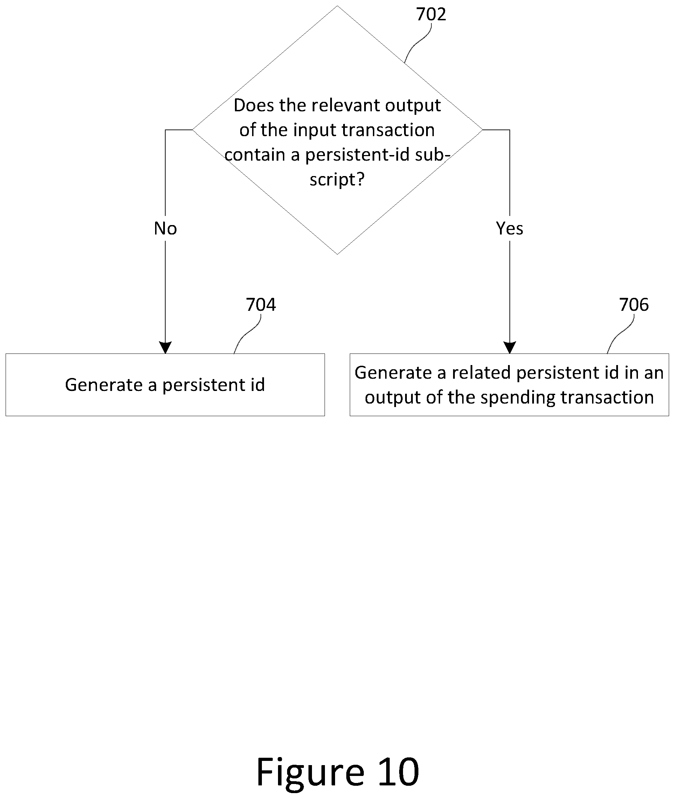

Typically, the persistent id depends on a feature of the transaction and/or block in which the account was first initialised (the 'genesis' transaction); each account is initialised as part of, or following, a genesis transaction (e.g. as described with reference to Figures 9 and 10a). The persistent id may, for example, depend on the block number, or the transaction hash, that relates to the genesis transaction. Following this genesis transaction, the persistent id may be hashed following each subsequent transaction, e.g. using a one-way hash, so that the account can be traced back to the genesis transaction, but the persistent id cannot be replicated.

For example, the persistent id may be generated using a one way hashing function that depends on a previous persistent id and a block number. On the generation of the persistent id, the persistent id may be based on a hash of a nonce (a 'number used only once') and a block number/transaction number. In the next block that is added to the blockchain 10, the persistent id may be based on a one way hash of the previous persistent id and the new block number. In this way the persistent id can be traced back to a genesis block, where any attempt to copy the persistent id sub-script or modify the chain of persistent ids will result in a different value being obtained.

The persistent id may be the same as, or may be different to, an account reference that relates to the account. In many cases it is preferable to have a constant account reference that can be referred to for any given block. Therefore, a constant account reference may be included alongside the (changing) persistent id, where the persistent id acts as a guarantor that the account reference has not been falsified (e.g. the persistent id may be a hashed value of the account reference).

The persistent id is preferably a unique value to avoid two accounts having the same reference. Generating a persistent id with a unique value may involve referencing a pool of extant persistent ids to ensure that a newly generated id has a unique value. In typical embodiments, the persistent id is generated in dependence on the transaction in which the account is generated (e.g. using a block number and an output index number). Since each transaction output is unique, this leads to the generation of a unique persistent id.

In some embodiments, the persistent id forms part of a persistent id sub-script, where the persistent id sub-script output may change for each block of the blockchain 10.

In some embodiments, the persistent id is formed on generation of the 'account' based on a hash that depends on the block and/or transaction in which the persistent id is first included. The persistent id is then replicated in each following block with some reference to the previous persistent id being included.

Typically, the persistent id is implemented using a persistent id sub-script, which is part of an account smart contract locking script. The account smart contract locking script may also contain an encoded definition of the state variables and functions of the 'account' that is being emulated. In this way the account smart contract provides the features of an account, which can be referenced in future transactions.

The account smart contract locking script may further comprise a virtual machine sub-script, which emulates the virtual machine part of an account model blockchain to enable the execution of complex functions.

Also disclosed herein is a message smart contract, which is a locking script that emulates a message transaction of an account model blockchain. The message smart contract is useable to invoke a single function of an account smart contract and comprises an account checker sub-script, which emulates the transaction processing part of an account model blockchain.

Returning to the example described in relation to Figure 4, Bob may hold an 'account' on the UTXO blockchain, where the input of the first transaction 22 contains a persistent id in its locking script. When Bob transfers the two exampleCoin to Alice (via the input of the second transaction 24), the remaining three exampleCoin is transferred to another address held by Bob (via the input of the third transaction 26). The persistent id is included as part of the transfer to the input of the third transaction 26, so that the first transaction 22 and the third transaction 26 can both be related to Bob via the shared persistent id. To enforce this, the locking script of the output of the first transaction 22 specifies that the persistent id present in the output of the first transaction 22 must be replicated in one (and, optionally, only one) of the outputs of the third transaction 26. If the persistent id is not included in one of the outputs of the third transaction 26, a node that evaluates the third transaction 26 will identify that the third transaction 26 is invalid and so the third transaction 26 will not be available for inclusion in a block.

In this way, instead of the third transaction 26 simply showing that three exampleCoin are held by the owner of the relevant UTXO, the third transaction 26 shows that three exampleCoin are held by Bob, who was also the holder of the first transaction 22. More generally, further information may be included alongside the persistent id, so that in relation to the persistent id there may be shown a history, or a number of functions, which relate to the activity of Bob.

In order to transfer an amount of a digital asset to Bob (or to request an amount of a digital asset from Bob), the persistent id relating to Bob can be referenced, where this persistent id can be related to a public key/address by an evaluation of the most recent block of the blockchain.

This use of an account enables greater functionality - as an example, the account held by Bob may be used in a similar way to a credit card. As part of a transaction, Bob may wish to transfer five units of a digital asset to Alice in the form of an IOU, where Alice can spend this digital asset at a later date (e.g. Alice may not be able to spend the digital asset for a week after the transaction).

In order to achieve this, Bob can include in the locking script of the output relating to the account (e.g. the output that is referenced by the input of the third transaction 26) conditional logic that allows Alice to withdraw five units a week after the first transaction 22 has been validated. After a week Alice can provide an unlocking script relating to the account in order to spend the five units. During the week the account may have been involved in a number of transactions, so that the output that contains the account functions may have changed (e.g. the output referenced by the input of Alice's transaction may no longer be the output of the spending transaction 400, but might instead be the output of a subsequent reaction); however, Alice is still able to refer to the account by the persistent id and/or the account reference to spend the five units.

### Locking/unlocking scripts

For the sake of providing a practical example of a locking/unlocking script there is considered here an example of a locking script based on the implementation used in Bitcoin, which uses a last-in first-out stack based scripting system. Here the locking script is implemented as:
scriptPubKey: OP_DUP OP_HASH160 <pubKeyHash> OP_EQUALVERIFY OP_CHECKSIG

This locking script (the 'scriptPubKey') is included in an output of the self transaction 300. When the input of the subsequent spending transaction 400 wishes to unlock the UTXO relating to the locked output, there is applied the unlocking script (the 'scriptSig'):
scriptSig: <sig><PubK>+scriptPubKey

Breaking this down, and with reference to Figure 7:
a) The signature <sig> and the public key <PubK> are pushed onto the stack;
b) The public key <PubK> is duplicated (so that the top two values of the stack are <PubK>);
c) The public key on top of the stack is hashed twice (using OP_HASH160) to obtain a hash of a public Bitcoin address;
d) The <pubKeyHash>, which is also a hash of a public Bitcoin address, is added to the stack;
e) The top two entries of the stack, which are the two public address hashes, are checked for equality (using OP_EQUALVERIFY) - this is to ensure that the scriptSig and the scriptPubKey relate to the same Bitcoin address;
f) If these two entries are equal, the public key <PubK> and the private key signature <sig> (which were the first values added to the stack) are checked for validity (using OP_CHECKSIG). In short, it is checked that the provided private key corresponds to the given public key.
g) If the private key signature <sig> is validated, the UTXO is unlocked and can be spent by implementing the scriptPubKey locking script with a new <pubKeyHash> value corresponding to a recipient of the UTXO.

In order to implement a persistent id, and indeed functions and states, modified locking and unlocking scripts are contemplated.

As an example, a locking script may comprise a modified locking script, which comprises a further parameter <persistentid> and a further function FUNC_CHECKPERSISTANCE. A corresponding modified unlocking script may require a further <persid> input. The FUNC_CHECKPERSISTANCE function of the modified locking script checks that <persistentid> and <persid> are related (e.g. equivalent) before unlocking the UTXO.

Similarly, state attributes and functional definitions can be included in the locking script, where their duplication and updating is a requirement for the unlocking of the UTXO.

An exemplary locking script may have the format:
OP_DUP OP_HASH160 <pubKeyHash> OP_EQUALVERIFY OP_CHECKSIG <persistentid> <statetypes><statevalues><functions><functionparameters>

The functions may refer to functions implemented in the programming/scripting language of the blockchain in questions (e.g. Script for Bitcoin), but more generally, the function may be defined in any language, where there may be provided an interpreter that is used to interpret the functions in the language of the blockchain 10 as part of the unlocking of the UTXO.

In order to check that the persistent id is included in the output of the transaction at the time of unlocking, the unlocking script typically requires access to this output (that is, the locking script of the output needs to be known before the input is unlocked).

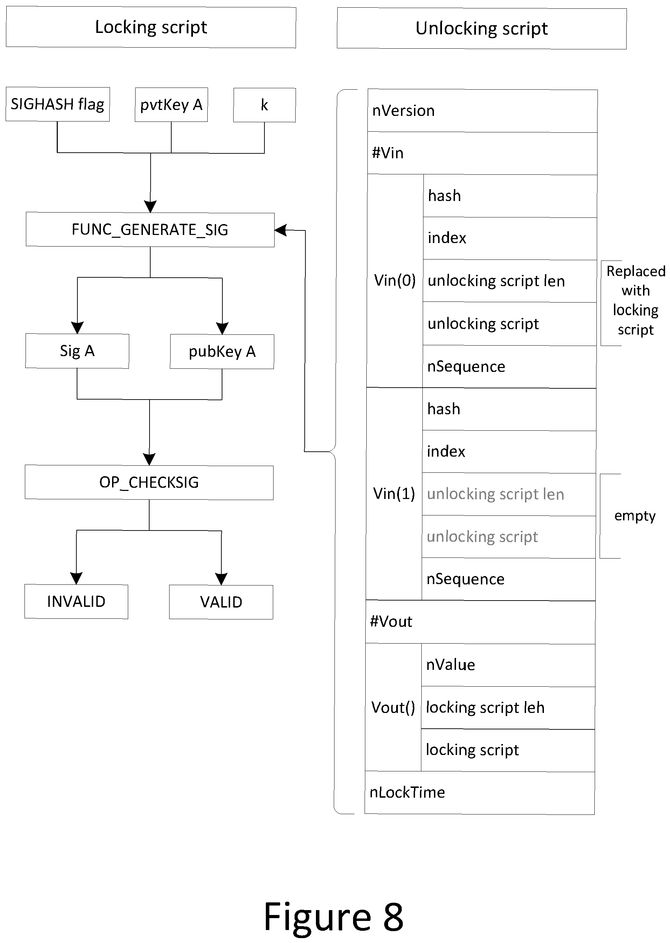

Referring to Figure 8, an exemplary method of enabling an unlocking script to refer to the transaction of which it is a component is described.

The spending transaction 400 can be identified by the evaluation of a transaction signature. Therefore, to ensure that the spending transaction 400 has been replicated in an unlocking script of the spending transaction 400 (so that the spending transaction 400 itself can be referenced when determining whether to unlock an input of the spending transaction 400), the presence of this signature in the relevant output of the spending transaction 400 can be determined.

A method of doing this is displayed by Figure 8 with reference to a possible implementation in Bitcoin.

An exemplary locking script requires an unlocking script that contains a signature hash flag, a private key, a nonce (k), and the spending transaction 400; typically, the values of the private key and the nonce do not matter.

These values are fed into a function (FUNC_GENERATE SIG), which generates a signature and a public key (as below):

| | |
|---|---|
| FUNC_GENERATE_SIG | <modified **spending tx** as per sighash flag>, <sighash flag>, <pvtKey A>, <k> → <sig A> <pubKey A> |

These values are fed into OP_CHECKSIG. If the first value entered into FUNC_GENERATE SIG is the spending transaction 400, OP_CHECKSIG will return as valid; otherwise OP_CHECKSIG will return as invalid.

It is infeasible to falsify the spending transaction 400 due to the use of OP_CHECKSIG, which is an elliptic curve signature verification algorithm,

Similar constraints are possible to require the unlocking script to provide the self transaction 300 and/or to provide a specific component (e.g. a specific output) of the self transaction 300 or the spending transaction 400. As an example, the provision of a transaction referred to by an input can be forced by the locking script of an output of the self transaction 300 requiring the unlocking script of an input of the spending transaction 400 to present a hash which refers to the hash of an output of the self transaction 300. Specifically, the unlocking script may obtain access to the spending transaction 400, extract a specific input from the spending transaction 400, extract the hash from the input (e.g. extract the hash corresponding to an output of the self transaction 300) and require the unlocking script to provide data which produces the same hash (e.g. to provide the input of the spending transaction 400 or the output of the self transaction 300).

A method of forcing the unlocking script of an input of the spending transaction 400 to provide the relevant information on the spending transaction 400 is described in more detail in WO 2018/215871 and WO2018215873. Further relevant methods for referencing information in the spending transaction 400 in an unlocking script of the spending transaction 400 are described in applications: WO WO2019043538; WO2018215876; WO2018215947; WO2019034983; WO2018215875; WO2019034959; and WO2018215872.

The unlocking script may be configured so as to require subsequent locking with a certain locking script - where the presence of this locking script is determinable by evaluating a value of the outputs of the spending transaction 400, which spending transaction 400 is provided as part of the unlocking script. Evaluating a value typically comprises evaluating a number of bits and/or bytes that are present in an output of the spending transaction. Evaluating a value may comprise, for example, identifying a certain string of characters in the locking script, identifying the presence of a certain sub-script in the locking script, or identifying a number of bits that are linked to, or dependent on, another value. In some embodiments, evaluating a value comprises identifying a link to/dependence on a genesis value, where the genesis value is determined at the time of creation of an account. Typically, the unlocking script requires the subsequent locking script to account for, e.g. contain, the persistent id sub-script.

It will be appreciated that while the above examples referred to Bitcoin, similar locking and unlocking scripts exist across blockchains and can be similarly modified.

The example described with reference to Figure 7 has considered a locking script that is based on a public key, where a corresponding unlocking script is based on a private key. It will be appreciated that the locking and unlocking scripts may be based on numerous other features and there is no need for a public key or private key to be used.

In particular, the emulation of an account enables the usage of functions that affect states of that account. These functions are typically used to control the transfer of funds out of the account. While these functions may require a private key, there may also be functions that do not require a private key. Funds may be released based on the completion of a smart contract, where the smart contract can be defined by a function relating to an account - for example, funds may be released to a party on delivery of goods, where this delivery may be electronically recorded/confirmed. Since the account persists throughout the blockchain 10, these functions do not need to be executed immediately, and so it is possible to make the transfer of funds contingent on the completion of an action.

Referring to Figure 9, there is described an implementation of the persistent id.

Each of the input transaction 200, the self transaction 300, and the spending transaction 400 contain a number of inputs and outputs. For each of the input transaction 200, the self transaction 300, and the spending transaction 400 there exists a single component input and a single component output that comprises a persistent id as well as an account smart contract locking script.

In some embodiments, the input and the output that contain the account smart contract locking script may have different indices; however, in the embodiment described with reference to Figure 9, the locking script of the output of the self transaction 300 constrains the spending transaction 400 to use the same input and output index for the spending of the digital asset. This simplifies the checking mechanism for the persistent id, where for each UTXO input the unlocking script need only check a single output for the presence of a persistent id. Furthermore, this prevents in a straightforward manner the inclusion of the persistent id in more than one output.

In order to satisfy the locking script of Output 3 of the self transaction 300 and thereby unlock the digital asset relating to this output, the unlocking script for Input 2 of the spending transaction 400 must demonstrate that the persistent id is replicated in an output of the spending transaction 400, specifically, the unlocking script must demonstrate that the persistent id is replicated in Output 2 of the spending transaction 400. Furthermore, the locking script for Output 2 of the spending transaction 400 must contain a similar constraint, so that the unlocking script of the relevant input of a subsequent transaction is required to demonstrate that the relevant output of that subsequent transaction contains the persistent id.

In order to enable this, the persistent id sub-script of the account smart contract for the output in the spending transaction 400 containing the persistent id sub-script preferably has access to the inputs and outputs of the spending transaction 400.

The persistent id sub-script of the account smart contract for each of the outputs in the spending transaction 400 may also have access to the inputs and outputs in the input transaction 200 and/or the self transaction 300 (e.g. by evaluation of the previous blocks of the blockchain 10 or by requiring the relevant unlocking script to include these transactions).

The persistent id sub-script imposes a condition on the output of the spending transaction 400, which requires the inclusion of the persistent id sub-script to allow the input to be unlocked and thereby spent as part of the output.

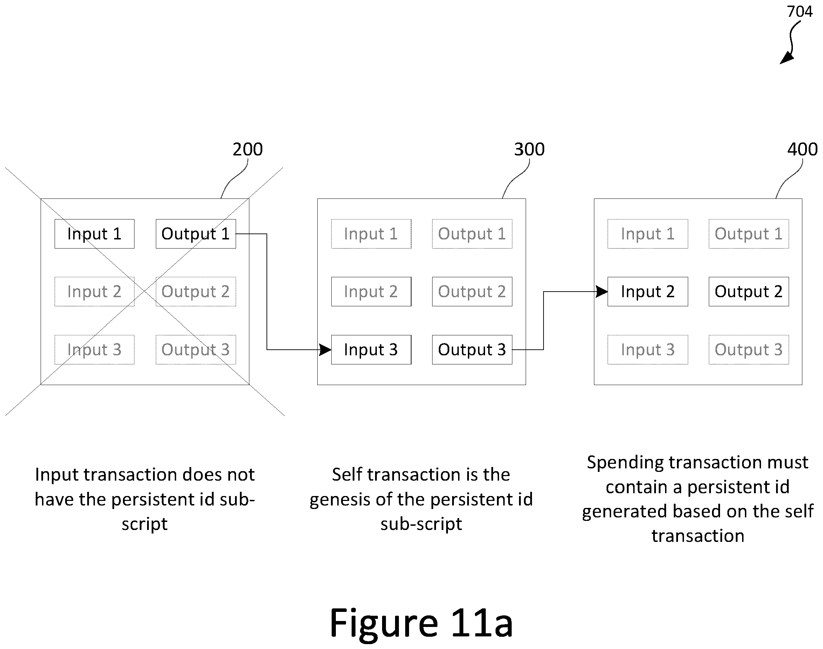

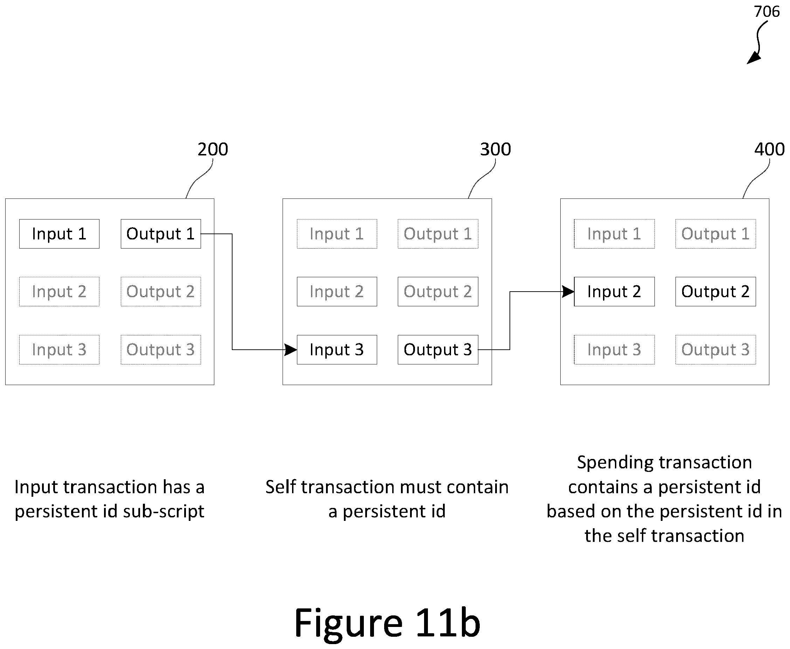

The persistent id sub-script may depend on the genesis block or the genesis transaction of the persistent id (as described with reference to Figures 10 and 11a/11b) and/or the persistent id may be based on a one-way hash that depends on the inputs and outputs of which the persistent id sub-script has been a component. Therefore, if a malicious entity attempts to copy the entire account smart contract for inclusion in a different input/output, the persistent id sub-script will result in a different persistent id being obtained.

Similarly, if a malicious entity attempts to remove the persistent id sub-script from an account so as to emulate the account in a different input/output, this removal will be immediately identifiable (since the persistent id sub-script will not appear in the expected output of the spending transaction 400).

Referring to Figures 10 and 11a/11b, there is described a method for identifying and/or generating a persistent id for use in a transaction.

In a first step 702, the relevant output of the input transaction 200 (that output which transfers the digital asset to the self transaction 300) is checked for the presence of a persistent id. Typically, the relevant output is checked for the presence of a persistent id sub-script.

In a second step 704, if there is no persistent id in the relevant output, the self transaction 300 acts as the genesis of the account, which first generates a persistent id. The persistent id may be set as a unique value determined using the self transaction 300, e.g. a hash of a combination of the self transaction 300 and the index of the output that contains a persistent id sub-script.

In an alternate second step 704, if there is a persistent id sub-script present in the relevant output of the input transaction 200, a related persistent id is generated and included in an output of the self transaction 300, e.g. as part of the locking script 354 of an output of the self transaction 300. The related persistent id included in the output of the self transaction 300 may be equivalent to the persistent id included in the output of the input transaction 200 or may be related as has been described above (e.g. based on a hash of the earlier persistent id). This inclusion of the related persistent id in the output of the self transaction 300 can be considered to be replication of the persistent id.

Typically, the replication of the persistent id also comprises replication of a persistent id sub-script and/or replication of an account smart contract that comprises an encoded definition of the account's state variables and functions. These variables and functions are typically initiated at the same time as the persistent id, where additional functions may also be added later, e.g. on supply of a private key relating to the account). In this way, a variable such as an amount held can be queried and a function such as a transaction that depends on a given input can be invoked. This enables the implementation of smart contracts.

This further enables the use of states in the UTXO blockchain, where the state of an account, e.g. the state relating to a persistent id, is stored as part of the account smart contract. The executed functions may alter the state of the account.

Invoking a function based on an account typically involves including in a transaction, e.g. in a locking script or an unlocking script, a message that: references the sending account/user (e.g. via a persistent id or via reference to a private key), references a function (e.g. by an identifier or index) and passes to the function any necessary parameters, and/or references a target account/user (e.g. via a persistent id or via reference to a public key). Therefore, the address which contains the account information (including the defined functions) can be identified via the persistent id, a function defined in relation to the account can be identified by the identifier and then executed based on the passed parameters.

Typically, the parameters to the function (apart from the public key) are included in a data signature, so as to prove the message has been created by an authorised sending user.

More specifically, the invoking of a function typically has two parts:
1. A message transaction, which defines the:
   a. Sending account (e.g. via a persistent id or public key).
   b. Target account (e.g. via a persistent id).
   c. Function to invoke (e.g. a transfer of a digital currency).
   d. Arguments to the function (e.g. an amount, or a signature indicating permission to record an entry).
2. A call to a virtual machine, which is able to execute the contents of the message transaction.

The message transaction represents a transition between two states of the account, where the virtual machine is used by miners to determine the next state given the current state and the message transaction.

It is preferable to ensure that the message transaction can only be executed against an account smart contract that is referenced in the message transaction, this requires the determination of an output of the spending transaction 400 that contains the account smart contract (e.g. that contains a certain persistent id).

This is achieved through the use of a message smart contract comprising message data, which contains the fields of the message transaction, and an account checker sub-script, which ensures that the message smart contract is executed by the target account smart contract.

In an exemplary embodiment the message data comprises:
- A public key - an identity associated with the message smart contract.
- A data signature - the digital signature made from the below fields (e.g. an elliptic curve data signature).
- An account id - this defines the account smart contract which contains the function that executes this message smart contract (e.g. via reference to a persistent id).
- A function reference - a reference to a function in the account smart contract.
- Arguments - zero or more additional fields to pass to the referenced function.
- A Nonce (a number used only once) - some number to ensure the uniqueness of the data sig.

And the account checker sub-script checks that:
- one of the outputs of the self transaction 300 contains an account smart contract with an account id state variable that matches the message data field.
- the account smart contract contains the persistent id sub-script.
- the account smart contract contains the virtual machine sub-script.
- an executed messages state variable of the account smart contract contains the message data; this executed messages state variable is useable to ensure that the message smart contract has been executed (and also to ensure that the same message smart contract is not executed twice).

The combination of the message smart contract and the account checker sub-script is arranged to comprise one or more calls to execute a function relating to the account. Furthermore, these scripts are arranged to ensure that the functions are executed against the correct account, e.g. based on a persistent id that is linked to a blockchain address, and to ensure that the functions are only executed once.

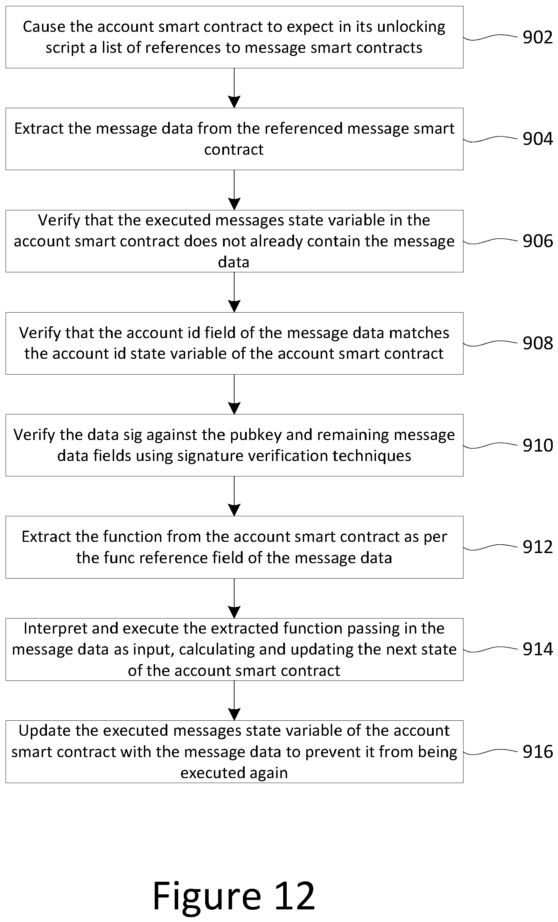

Referring to Figure 12, there is shown a flowchart for a method carried out by an embodiment of the virtual machine sub-script. The running of this virtual-machine sub-script may be a condition of the unlocking of a UTXO containing the account smart contract/persistent id sub-script.

In a first step 902, the virtual machine sub-script causes the account smart contract to expect in its unlocking script a list of references to message smart contracts. Effectively, the first step 902 constrains the account smart contract to carry out a number of functions relating to the message smart contracts as part of the process of unlocking the UTXO relating to the emulated account, e.g. by providing input indexes of those message smart contracts.

Following the first step 902, second to eighth steps as described below are carried out for each reference to a message smart contract that is present in the unlocking script.

In a second step 904, the message data is extracted from the referenced message smart contract.

In a third step 906, the virtual machine sub-script verifies that the executed messages state variable in the account smart contract does not already contain the message data. That is, the virtual machine sub-script checks that the referenced message smart contract has not already been executed against the account linked to the account smart contract/persistent id, e.g. by checking a counter, or checking a merkle tree with the hash of the message data as leaves of the merkle tree.

In a fourth step 908, the virtual machine sub-script certifies that the account id field of the message data matches the account id state variable (e.g. the persistent id) of the account smart contract. That is, the virtual machine sub-script ensures that the message smart contract is being executed based on the correct account.

In a fifth step 910, the virtual machine sub-script verifies the data signature against the public key and remaining message data fields using signature verification techniques as, for example, described with reference to Figures 7 and 8. That is, the virtual machine sub-script ensures that the message data has been authorised by an appropriate party.

In a sixth step 912, the virtual machine sub-script uses the function reference field of the message data to extract a function from the account smart contract. The account smart contract may comprise a number of functions as for example described in relation to Figure 7. The virtual machine sub-script extracts a specific function from the account smart contract based on, for example, a reference or a function index.

In a seventh step 914, the virtual machine sub-script interprets and executes the extracted function, passing in the message data as inputs. This execution is used to calculate and update the next state of the account smart contract. The interpretation of the function may rely on a 'bytecode' decoder that interprets sequences of bytes in the blockchain's native scripting language,

In an eighth step 916, the virtual machine sub-script updates the executed messages state variable of the account smart contract with the message data or a reference to the message data, e.g. a message id, to prevent the message smart contract from being executed again.

The executed functions may, for example, form constraints on the transfer of funds from the account, or may require the recording of certain data. These functions may be written in any coding language and then may be interpreted in the scripting language of the blockchain. This allows for the implementation of complex conditional logic in a range of UTXO blockchains. Typically, the virtual machine sub-script and the persistent id sub-script are standardised, so that any entity executing these sub-scripts is able to know in advance what the effect of running the sub-scripts will be.

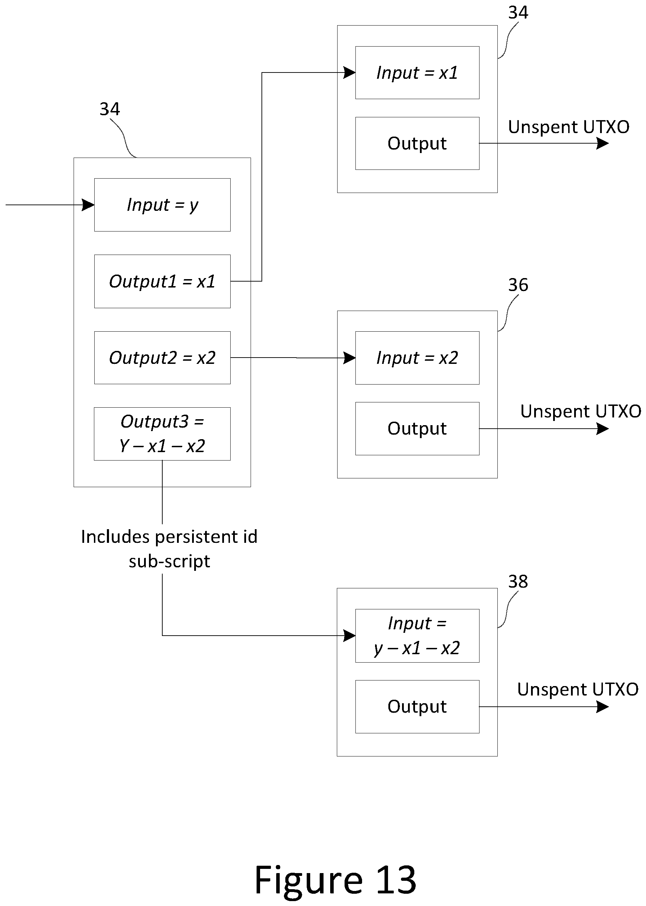

A practical example of the implementation of smart contracts is described with reference to Figure 13.

In the example of Figure 13, a first party that holds an amount of digital currency y wishes to transfer an amount x1 to a second party. A smart contract that is related to the first party requires that any transaction made by the first party incurs a fee x2, which is paid to a third party. The remainder of the digital currency is transferred to another address held by the first party, where this other address must include the persistent id sub-script.

The situation of Figure 12 may be found where a government wishes to enforce sales taxes. Requiring a persistent id allows the government to link blockchain addresses to entities and the requirement of the fee x2, which can be implemented using a smart contract, enables the sales tax to be automatically collected.

When the first party initiates the transaction, e.g. attempts to unlock the input y, there is generated a message smart contract that takes as parameters the persistent id of the first party, the blockchain address of the third party, and the amount x1 being transferred to the second party. This generation is a condition of the unlocking script of the input. This message smart contract is passed to the virtual machine sub-script.

The virtual machine sub-script iterates over the outputs of the transaction and determines the output that contains the persistent id. The virtual machine sub-script then checks the executed messages variable of the output to ensure that the message smart contract has not already been executed.

The virtual machine sub-script then executes the generated message smart contract against this output; in this example, the virtual machine sub-script determines the amount x2, e.g. as a percentage of the amount x1, and generates a further output that transfers this amount x2 to the address held by the third party.

The output is then updated to indicate the new state of the account - in this example, the state of the value variable of the account will be updated from 'y' to 'y - x1 - x2'.

Once the message smart contract is executed, the executed messages of the output are updated, e.g. an identifier relating to the message smart contract is included in the executed messages, to indicate that this message has been executed.

The transaction is then included in a block which can be added to the blockchain 10. The persistent id is included in the locking script of the output to the other address held by the first party; therefore, the account of the first party persists in the blockchain 10.

### Alternatives and modifications

While the detailed description has primarily considered the transfer of a digital asset, it will be appreciated that more generally the blockchain 10 may record any form of information. The blockchain 10 may for example store information relating to the behaviour of a party.

The information stored on the blockchain 10 may be used to present an output to a user and/or to trigger an alarm. For example, the presence of a particular record on the blockchain may result in an alert being generated and displayed to a relevant party. Further, one or more parties may be able to view records stored on the blockchain, where these records may inform decisions made by those parties. As examples, the records may enable governments to enforce laws, parents to supervise the activities of their children, or companies to develop more efficient products. In general, the blockchain 10 enables parties to take action based on recorded information, where this information is typically recorded in an immutable manner.

In particular, records may be stored as a state that references the persistent identifier, where this state may be altered as part of a transaction. The state could then be queried, with reference to the persistent id, to enable a user to view information about the account holder. This information may be presented to a user that is viewing the blockchain.

While the detailed description has primarily given examples with reference to Bitcoin, it will be appreciated that the disclosed systems and methods are equally applicable to other blockchain implementations, where appropriate modifications may be required to take into account differing operation codes.

In some embodiments, the locking script may require a certain reference in the unlocking script, for example the UTXOs relating to a persistent id may only be spendable if a second account (e.g. a second persistent ID) is referenced in the inputs of a transaction.

Two or more accounts may be related, or interlocked, where the functions of a first account may depend on a feature of the second account. In practice, there may be a shared portion of the first account, where this portion of the first account (e.g. an amount of a digital asset) can only be used with the consent of the second account. As an example, Alice and Bob may both have locking scripts relating to their accounts, where the locking scripts each require the persistent id of the other locking script to be present in the spending transaction 400. Furthermore, they may both require an output of the spending transaction 400 to transfer an amount of the digital asset to a third party.

Two locking scripts relating to different outputs may be linked whereby an unlocking script of the spending transaction 400 that unlocks a first output of the self transaction 300 checks for the presence in the spending transaction 400 of the persistent id of a second output of the self transaction 300.

Various other modifications will be apparent to those skilled in the art, for example:

### Data Siq on Subset of Fields

Similar to the signature hash (SIGHASH) field of a Bitcoin signature, the data signature field of the message data may have a suffix which set out what subset of fields in the message data are included in the signature. The subset of fields chosen may have different implications, for example signing all fields may mean that no part of the message can be modified, whereas signing a subset of fields may mean that the unsigned fields can be dynamically set by miners or other parties

### "Gas" Emulation

In some embodiments, the transaction fee incurred by a message smart contract invoking a function of an account smart contract is determined based on the number of opcodes executed.

In other embodiments, a "Gas" like concept of the account model (e.g. similar to the gas concept used by Ethereum: "Ethereum White Paper. Buterin, V. (2014). https://blockchainlab.com/pdf/Ethereum_white_paper-a_next_generation_smart_contract_and_dec entralized_application_platform-vitalik-buterin.pdf") can be implemented, where each operation code has a gas limit and the message transaction allows a user to set a gas price. The transaction fee is calculated by "gas limit x gas price".

This can be emulated by including a gas limit for each function of an account smart contract, and adding a gas price field to the message data of a message smart contract.

### Accounts invoking other Accounts

In Ethereum, it is possible that when a user invokes a function of an Account, this in turn invokes the function of another Account, and so on. This chain of invocations is done in a single calculation of the next state by an Ethereum miner.

In some embodiments, account smart contracts invoking other account smart contracts are emulated, e.g. by extending account smart contracts to be able to emit message smart contract(s). By default, this will result in the chain of invocations taking place over multiple blocks as each message smart contract normally is only spent in the next spending transaction.

In some embodiments, an alternative approach which emulates the chain of invocations occurring in a single calculation is used, requiring the chain of account smart contracts to be present in the same spending transaction, with these account smart contracts immediately processing emitted message smart contracts.

### Smart Wallets

In some embodiments, an account smart contract is used which acts as a user's wallet with functionality including for example:
- IOU - instantaneously generatable receipts which allows the creditor to withdraw the owed amount at any time.
- Contingent Payments - payments which only occur upon some condition becoming true.
- Orders - request for purchase which allows any party to take the payment if they provide the requested assets.
- Recurring Payments - IOUs which are recurring and can allow the creditor to set the amount (e.g. direct debits).

### Tokens

In Ethereum, an account serves as a platform for second layer protocols to be built on top, for example, ERC20 tokens. This is also possible on UTXO model blockchains using the account emulation disclosed herein.

It will be understood that the present invention has been described above purely by way of example, and modifications of detail can be made within the scope of the invention.

Reference numerals appearing in the claims are by way of illustration only and shall have no limiting effect on the scope of the claims.

## Claims

1. A computer-implemented method of configuring an Unspent Transaction Output, UTXO, blockchain (10) in order to emulate an account model blockchain, the method comprising configuring the UTXO blockchain (10) so that upon a spending transaction (300) being received at a node for validation prior to inclusion in a block of the UTXO blockchain (10), the node:
determines the presence of an identifier relating to an account in an input of the spending transaction (400); and
validates the spending transaction (400) only when:
the same identifier is also present in an output of the spending transaction (400); and
a single output of the spending transaction (400) comprises a locking script that requires:
an unlocking script of a subsequent transaction to reference the identifier; and
an output of the subsequent transaction to comprise the identifier;
wherein the identifier comprises a unique identifier.

2. The method of any one of the preceding claims, further comprising generating an identifier if there is no identifier present in the input.

3. The method of claim 2, wherein the generation of the identifier depends on a feature of at least one of:
the spending transaction (400);
the block containing the spending transaction (400);
a previous transaction (200, 300);
the block containing the previous transaction (200, 300);
an immediately previous transaction (300) that is referenced by an input of the spending transaction (400);
the block containing the immediately previous transaction (300);
a secondary previous transaction (200) that is referenced by an input of the immediately previous transaction (300); and
the block containing the secondary previous transaction (200).

4. The method of any one of the preceding claims, wherein determining the presence of an identifier in an input of the spending transaction (400) comprises determining the presence of an identifier in the output of a previous transaction (200, 300), which output of the previous transaction (200, 300) is referenced by the input of the spending transaction (400), preferably wherein the identifier being present in the output of a previous transaction (200, 300) comprises the identifier being present in a locking script of said output.

5. The method of any one of the preceding claims, wherein the locking script constrains the subsequent transaction to include in an unlocking script information relating to the subsequent transaction and/or a copy of the subsequent transaction.

6. The method of any one of the preceding claims, wherein determining the presence of the identifier comprises evaluating a value of the output, which value relates to the identifier, preferably wherein the value of the output is dependent on at least one of:
the value of a previous output;
the value of a genesis value, the genesis value being determined at the time of creation of the account;
a feature of the block being added to the blockchain, preferably a sequence number of the block or another block of the blockchain.

7. The method of any one of the preceding claims, further comprising associating a function and/or a state with the identifier, preferably further comprising replicating and/or updating in the output of the spending transaction (400) the function and/or the state relating to the input.

8. The method of any one of the preceding claims, wherein the node executes a function, the function being defined with reference to the identifier, optionally wherein one or more parameters to pass to the function are extracted from an/the unlocking script of the input, preferably wherein the parameters are passed via reference to a UTXO of the blockchain (10).

9. The method of claim 7 or 8, further comprising:
comparing a value included in an unlocking script of the transaction to an expected value, the value being determined using the function, preferably wherein the expected value is defined in a/the locking script of a previous transaction; and/or
determining the presence of the spending transaction (400) in the unlocking script.

10. The method of any one of claims 7 to 9, further comprising determining a value relating to the spending transaction (400), preferably wherein:
the value relating to the spending transaction (400) is determined by executing the function using one or more parameters extracted from the spending transaction (400); and/or
the method further comprises comparing the determined value to an/the expected value, the expected value being referenced by a/the locking script, preferably wherein the method further comprises validating the transaction only if the determined value is the same as the expected value.

11. The method of any one of claims 7 to 10, further comprising:
determining for an input set of parameters whether a function referencing the input set of parameters has already been executed, preferably by evaluating a state relating to the identifier; and/or
updating a state relating to the identifier in order to indicate that a function referencing an input set of parameters has been executed; and/or
updating a state relating to the identifier upon execution of the function, preferably wherein the state comprises an amount of a digital asset related to the identifier.

12. The method of any one of the preceding claims, further comprising:
indicating to a further node that the spending transaction (400) is valid; and/or
transmitting to a further node a block comprising the spending transaction (400), preferably wherein transmitting the block comprises transmitting a blockchain comprising the block.

13. An apparatus for storing an Unspent Transaction Output, UTXO, blockchain (10) that emulates an account model blockchain, the apparatus comprising:
means for storing a blockchain, wherein the means for storing a blockchain is arranged to store a UTXO blockchain (10) comprising a block, wherein the block comprises a spending transaction (400),
wherein an output of the spending transaction (400) comprises an identifier that relates to an account and that is the same as an identifier present in an input of the spending transaction (400);
wherein a single output of the spending transaction (400) comprises a locking script that requires:
an unlocking script of a subsequent transaction to reference the identifier; and
an output of the subsequent transaction to comprise the identifier; and
wherein the identifier comprises a unique identifier.

14. An Unspent Transaction Output, UTXO, blockchain (10) that emulates an account model blockchain, the UTXO blockchain (10) comprising a block, wherein the block comprises a spending transaction (400),
wherein an output of the spending transaction (400) comprises an identifier that relates to an account and that is the same as an identifier present in an input of the spending transaction (400);
wherein a single output of the spending transaction (400) comprises a locking script that requires:
an unlocking script of a subsequent transaction to reference the identifier; and
an output of the subsequent transaction to comprise the identifier; and
wherein the identifier comprises a unique identifier.

15. A computer-implemented method of validating a spending transaction prior to inclusion in a block of an Unspent Transaction Output, UTXO, blockchain (10) that emulates an account model blockchain, the method comprising:
determining the presence of an identifier relating to an account in an input of the spending transaction (400); and
validating the spending transaction (400) only when:
the same identifier is also present in an output of the spending transaction (400); and
a single output of the spending transaction (400) comprises a locking script that requires:
an unlocking script of a subsequent transaction to reference the identifier; and
an output of the subsequent transaction to comprise the identifier;
wherein the identifier comprises a unique identifier.

## Patentansprüche

1. Computerimplementiertes Verfahren zum Konfigurieren einer Unspent Transaction Output Blockchain (10), UTXO-Blockchain, um eine Kontomodell-Blockchain zu emulieren, wobei das Verfahren das Konfigurieren der UTXO-Blockchain (10) umfasst, so dass, wenn eine Ausgabetransaktion (300) an einem Knoten zur Validierung vor der Aufnahme in einen Block der UTXO-Blockchain (10) empfangen wird, der Knoten:
das Vorhandensein einer Kennung in Bezug auf ein Konto in einer Eingabe der Ausgabentransaktion (400) feststellt; und
die Ausgabentransaktion (400) nur validiert, wenn:
die gleiche Kennung auch in einer Ausgabe der Ausgabetransaktion (400) vorhanden ist; und
eine einzige Ausgabe der Ausgabetransaktion (400) ein Sperrskript umfasst, das Folgendes erfordert:
ein Freigabeskript einer nachfolgenden Transaktion, um auf den Identifikator zu verweisen; und
eine Ausgabe der nachfolgenden Transaktion, die den Identifikator enthält;
wobei der Identifikator einen eindeutigen Identifikator umfasst.

2. Das Verfahren nach einem der vorhergehenden Ansprüche ferner umfassend das Erzeugen eines Identifikators, wenn in der Eingabe kein Identifikator vorhanden ist.

3. Das Verfahren nach Anspruch 2, wobei die Erzeugung des Identifikators von mindestens einem der folgenden Merkmale abhängt:
der Ausgabentransaktion (400);
dem Block mit der Ausgabentransaktion (400);
einer früheren Transaktion (200, 300);
dem Block, der die vorherige Transaktion enthält (200, 300);
einer unmittelbar vorhergehenden Transaktion (300), auf die sich eine Eingabe der Ausgabetransaktion (400) bezieht;
dem Block mit der unmittelbar vorhergehenden Transaktion (300);
einer sekundären vorherigen Transaktion (200), auf die durch eine Eingabe der unmittelbar vorherigen Transaktion (300) Bezug genommen wird; und
dem Block mit der sekundären vorherigen Transaktion (200).

4. Das Verfahren nach einem der vorhergehenden Ansprüche, wobei das Bestimmen des Vorhandenseins eines Identifikators in einer Eingabe der Ausgabetransaktion (400) das Bestimmen des Vorhandenseins eines Identifikators in der Ausgabe einer vorhergehenden Transaktion (200, 300) umfasst, wobei die Ausgabe der vorhergehenden Transaktion (200, 300) durch die Eingabe der Ausgabetransaktion (400) referenziert wird, wobei der Identifikator, der in der Ausgabe einer vorhergehenden Transaktion (200, 300) vorhanden ist, vorzugsweise umfasst, dass der Identifikator in einem Sperrskript der Ausgabe vorhanden ist.

5. Das Verfahren nach einem der vorhergehenden Ansprüche, wobei das Sperrskript die nachfolgende Transaktion dazu zwingt, in ein Entsperrskript Informationen aufzunehmen, die sich auf die nachfolgende Transaktion und/oder eine Kopie der nachfolgenden Transaktion beziehen.

6. Das Verfahren nach einem der vorhergehenden Ansprüche, wobei das Bestimmen des Vorhandenseins des Identifikators das Auswerten eines Wertes der Ausgabe umfasst, der sich auf den Identifikator bezieht, wobei der Wert der Ausgabe vorzugsweise von mindestens einem der folgenden Punkte abhängig ist:
dem Wert einer früheren Ausgabe;
dem Wert eines Entstehungswerts, wobei der Entstehungswert zum Zeitpunkt der Einrichtung des Kontos festgelegt wird;
einem Merkmal des Blocks, der der Blockchain hinzugefügt wird, vorzugsweise eine Sequenznummer des Blocks oder eines anderen Blocks der Blockchain.

7. Das Verfahren nach einem der vorangegangenen Ansprüche ferner umfassend das Zuordnen einer Funktion und/oder eines Zustands zu dem Identifikator, vorzugsweise ferner das Replizieren und/oder Aktualisieren der Funktion und/oder des Zustands in Bezug auf die Eingabe in der Ausgabe der Ausgabetransaktion (400).

8. Das Verfahren nach einem der vorhergehenden Ansprüche, wobei der Knoten eine Funktion ausführt, die unter Bezugnahme auf den Identifikator definiert ist, wobei optional ein oder mehrere Parameter, die an die Funktion zu übergeben sind, aus einem/dem Entsperrungsskript der Eingabe extrahiert werden, wobei die Parameter vorzugsweise über eine Referenz zu einer UTXO der Blockchain (10) übergeben werden.

9. Das Verfahren nach Anspruch 7 oder 8 ferner umfassend:
Vergleichen eines in einem Freigabeskript der Transaktion enthaltenen Wertes mit einem erwarteten Wert, wobei der Wert unter Verwendung der Funktion bestimmt wird, wobei der erwartete Wert vorzugsweise in einem/dem Sperrskript einer vorherigen Transaktion definiert ist; und/oder
Feststellen des Vorhandenseins der Ausgabentransaktion (400) im Freigabeskript.

10. Das Verfahren nach einem der Ansprüche 7 bis 9 ferner umfassend die Bestimmung eines Wertes, der sich auf die Ausgabetransaktion (400) bezieht, vorzugsweise wobei:
der Wert, der sich auf die Ausgabetransaktion (400) bezieht, durch Ausführen der Funktion unter Verwendung eines oder mehrerer Parameter, die aus der Ausgabetransaktion (400) extrahiert wurden, bestimmt wird; und/oder
das Verfahren ferner das Vergleichen des ermittelten Wertes mit einem/dem erwarteten Wert umfasst, wobei der erwartete Wert von einem/dem Sperrskript referenziert wird, wobei das Verfahren vorzugsweise ferner das Validieren der Transaktion nur dann umfasst, wenn der ermittelte Wert derselbe wie der erwartete Wert ist.

11. Das Verfahren nach einem der Ansprüche 7 bis 10 ferner umfassend:
für einen Eingabeparametersatz ermitteln, ob eine Funktion, die auf den Eingabeparametersatz verweist, bereits ausgeführt wurde, vorzugsweise durch Auswerten eines Zustands in Bezug auf die Kennung; und/oder
Aktualisieren eines Zustands in Bezug auf die Kennung, um anzuzeigen, dass eine Funktion, die sich auf einen Eingabesatz von Parametern bezieht, ausgeführt wurde; und/oder
Aktualisieren eines Zustands in Bezug auf die Kennung bei Ausführung der Funktion, wobei der Zustand vorzugsweise eine Menge eines digitalen Vermögenswerts in Bezug auf die Kennung umfasst.

12. Das Verfahren nach einem der vorangegangenen Ansprüche ferner umfassend:
an einen weiteren Knoten anzeigen, dass die Ausgabetransaktion (400) gültig ist; und/oder
Übertragen eines die Ausgabentransaktion (400) umfassenden Blocks an einen weiteren Knoten, wobei das Übertragen des Blocks vorzugsweise das Übertragen einer den Block umfassenden Blockchain umfasst.

13. Eine Vorrichtung zum Speichern einer Unspent Transaction Output Blockchain (10), UTXO-Blockchain, die eine Kontomodell-Blockchain emuliert, wobei die Vorrichtung umfasst:
Mittel zum Speichern einer Blockchain, wobei das Mittel zum Speichern einer Blockchain angeordnet ist, um eine UTXO-Blockchain (10) zu speichern, die einen Block umfasst, wobei der Block eine Ausgabetransaktion (400) umfasst,
wobei eine Ausgabe der Ausgabetransaktion (400) einen Identifikator umfasst, der sich auf ein Konto bezieht und der der gleiche ist wie ein Identifikator, der in einer Eingabe der Ausgabetransaktion (400) vorhanden ist;
wobei eine einzelne Ausgabe der Ausgabetransaktion (400) ein Sperrskript umfasst, das Folgendes erfordert:
ein Freigabeskript einer nachfolgenden Transaktion, um auf den Identifikator zu verweisen; und
eine Ausgabe der nachfolgenden Transaktion, die den Identifikator enthält; und
wobei der Identifikator einen eindeutigen Identifikator umfasst.

14. Eine Unspent Transaction Output Blockchain (10), UTXO-Blockchain, die eine Kontomodell-Blockchain emuliert, wobei die UTXO-Blockchain (10) einen Block umfasst, wobei der Block eine Ausgabetransaktion (400) umfasst,
wobei eine Ausgabe der Ausgabetransaktion (400) einen Identifikator umfasst, der sich auf ein Konto bezieht und der der gleiche ist wie ein Identifikator, der in einer Eingabe der Ausgabetransaktion (400) vorhanden ist;
wobei eine einzelne Ausgabe der Ausgabetransaktion (400) ein Sperrskript umfasst, das Folgendes erfordert:
ein Freigabeskript einer nachfolgenden Transaktion, um auf den Identifikator zu verweisen; und
eine Ausgabe der nachfolgenden Transaktion, die den Identifikator enthält; und
wobei der Identifikator einen eindeutigen Identifikator umfasst.

15. Ein computerimplementiertes Verfahren zur Validierung einer Ausgabetransaktion vor der Aufnahme in einen Block einer Unspent Transaction Output Blockchain (10), UTXO-Blockchain, die eine Kontomodell-Blockchain emuliert, wobei das Verfahren umfasst:
Bestimmung des Vorhandenseins eines Identifikators, der sich auf ein Konto bezieht, in einer Eingabe der Ausgabentransaktion (400); und
Validierung der Ausgabentransaktion (400) nur, wenn:
derselbe Identifikator auch in einer Ausgabe der Ausgabetransaktion (400) vorhanden ist; und
eine einzige Ausgabe der Ausgabetransaktion (400) ein Sperrskript umfasst, das Folgendes erfordert:
ein Freigabeskript einer nachfolgenden Transaktion, um auf den Identifikator zu verweisen; und
eine Ausgabe der nachfolgenden Transaktion, die den Identifikator enthält;
wobei der Identifikator einen eindeutigen Identifikator umfasst.

## Revendications

1. Procédé mis en œuvre par ordinateur de configuration d'une chaîne de blocs de sortie de transaction non dépensée (UTXO) (10) afin d'émuler une chaîne de blocs de modèle de compte, le procédé consistant à configurer la chaîne de blocs UTXO (10) de sorte qu'au moment de recevoir une transaction de dépense (300) au niveau d'un nœud en vue de sa validation avant son inclusion dans un bloc de la chaîne de blocs UTXO (10), le nœud:
détermine la présence d'un identifiant se rapportant à un compte dans une entrée de la transaction de dépense (400); et
valide la transaction de dépense (400) uniquement lorsque:
le même identifiant est également présent dans une sortie de la transaction de dépense (400); et
une seule sortie de la transaction de dépense (400) comprend un script de verrouillage qui requiert:
qu'un script de déverrouillage d'une transaction suivante fasse référence à l'identifiant; et
qu'une sortie de la transaction suivante comprenne l'identifiant;
l'identifiant comprenant un identifiant unique.

2. Procédé selon l'une quelconque des revendications précédentes, consistant en outre à générer un identifiant s'il n'y a aucun identifiant présent dans l'entrée.

3. Procédé selon la revendication 2, dans lequel la génération de l'identifiant dépend d'une caractéristique d'au moins un des éléments suivants:
la transaction de dépense (400);
le bloc contenant la transaction de dépense (400);
une transaction précédente (200, 300);
le bloc contenant la transaction précédente (200, 300) ;
une transaction immédiatement précédente (300) à laquelle fait référence une entrée de la transaction de dépense (400);
le bloc contenant la transaction immédiatement précédente (300);
une transaction précédente secondaire (200) à laquelle fait référence une entrée de la transaction immédiatement précédente (300); et
le bloc contenant la transaction précédente secondaire (200).

4. Procédé selon l'une quelconque des revendications précédentes, dans lequel la détermination de la présence d'un identifiant dans une entrée de la transaction de dépense (400) consiste à déterminer la présence d'un identifiant dans la sortie d'une transaction précédente (200, 300), l'entrée de la transaction de dépense (400) faisant référence à ladite sortie de la transaction précédente (200, 300), de préférence le fait que l'identifiant soit présent dans la sortie d'une transaction précédente (200, 300) consistant en ce que l'identifiant soit présent dans un script de verrouillage de ladite sortie.

5. Procédé selon l'une quelconque des revendications précédentes, dans lequel le script de verrouillage contraint la transaction suivante à inclure dans un script de déverrouillage des informations se rapportant à la transaction suivante et/ou à une copie de la transaction suivante.

6. Procédé selon l'une quelconque des revendications précédentes, dans lequel la détermination de la présence de l'identifiant consiste à évaluer une valeur de la sortie, ladite valeur se rapportant à l'identifiant, de préférence la valeur de la sortie dépendant d'au moins un des éléments suivants:
la valeur d'une sortie précédente;
la valeur d'une valeur de genèse, la valeur de genèse étant déterminée au moment de la création du compte;
une caractéristique du bloc qui est ajouté à la chaîne de blocs, de préférence un numéro de séquence du bloc ou d'un autre bloc de la chaîne de blocs.

7. Procédé selon l'une quelconque des revendications précédentes, consistant en outre à associer une fonction et/ou un état à l'identifiant, de préférence consistant en outre à répliquer et/ou à mettre à jour la fonction et/ou l'état se rapportant à l'entrée dans la sortie de la transaction de dépense (400).

8. Procédé selon l'une quelconque des revendications précédentes, dans lequel le nœud exécute une fonction, la fonction étant définie en référence à l'identifiant, éventuellement dans lequel un ou plusieurs paramètres à transmettre à la fonction sont extraits d'un ou du script de déverrouillage de l'entrée, de préférence dans lequel les paramètres sont transmis par l'intermédiaire d'une référence à une UTXO de la chaîne de blocs (10).

9. Procédé selon la revendication 7 ou 8, consistant en outre à:
comparer une valeur comprise dans un script de déverrouillage de la transaction à une valeur attendue, la valeur étant déterminée au moyen de la fonction, de préférence la valeur attendue étant définie dans un ou le script de verrouillage d'une transaction précédente; et/ou
déterminer la présence de la transaction de dépense (400) dans le script de déverrouillage.

10. Procédé selon l'une quelconque des revendications 7 à 9, consistant en outre à déterminer une valeur se rapportant à la transaction de dépense (400), de préférence:
la valeur se rapportant à la transaction de dépense (400) étant déterminée en exécutant la fonction au moyen d'un ou plusieurs paramètres extraits de la transaction de dépense (400); et/ou
le procédé consistant en outre à comparer la valeur déterminée à une ou la valeur attendue, un ou le script de verrouillage faisant référence à la valeur attendue, de préférence le procédé consistant en outre à valider la transaction uniquement si la valeur déterminée est la même que la valeur attendue.

11. Procédé selon l'une quelconque des revendications 7 à 10, consistant en outre à:
déterminer pour un ensemble d'entrée de paramètres, si une fonction faisant référence à l'ensemble d'entrée de paramètres a déjà été exécutée, de préférence en évaluant un état se rapportant à l'identifiant; et/ou
mettre à jour un état se rapportant à l'identifiant afin d'indiquer qu'une fonction faisant référence à un ensemble d'entrée de paramètres a été exécutée; et/ou
mettre à jour un état se rapportant à l'identifiant au moment de l'exécution de la fonction, de préférence l'état comprenant une quantité d'un actif numérique se rapportant à l'identifiant.

12. Procédé selon l'une quelconque des revendications précédentes, consistant en outre à:
indiquer à un autre nœud que la transaction de dépense (400) est valide; et/ou
transmettre à un autre nœud un bloc comprenant la transaction de dépense (400), de préférence la transmission du bloc consistant à transmettre une chaîne de blocs comprenant le bloc.

13. Appareil de stockage d'une chaîne de blocs de sortie de transaction non dépensée (UTXO) (10) qui émule une chaîne de blocs de modèle de compte, l'appareil comprenant:
un moyen permettant de stocker une chaîne de blocs, le moyen permettant de stocker une chaîne de blocs étant conçu pour stocker une chaîne de blocs UTXO (10) comprenant un bloc, le bloc comprenant une transaction de dépense (400),
une sortie de la transaction de dépense (400) comprenant un identifiant qui se rapporte à un compte et qui est le même qu'un identifiant présent dans une entrée de la transaction de dépense (400);
une seule sortie de la transaction de dépense (400) comprenant un script de verrouillage qui requiert:
qu'un script de déverrouillage d'une transaction suivante fasse référence à l'identifiant; et
qu'une sortie de la transaction suivante comprenne l'identifiant; et
l'identifiant comprenant un identifiant unique.

14. Chaîne de blocs de sortie de transaction non dépensée (UTXO) (10) qui émule une chaîne de blocs de modèle de compte, la chaîne de blocs UTXO (10) comprenant un bloc, le bloc comprenant une transaction de dépense (400),
une sortie de la transaction de dépense (400) comprenant un identifiant qui se rapporte à un compte et qui est le même qu'un identifiant présent dans une entrée de la transaction de dépense (400);
une seule sortie de la transaction de dépense (400) comprenant un script de verrouillage qui requiert:
qu'un script de déverrouillage d'une transaction suivante fasse référence à l'identifiant; et
qu'une sortie de la transaction suivante comprenne l'identifiant; et
l'identifiant comprenant un identifiant unique.

15. Procédé mis en œuvre par ordinateur de validation d'une transaction de dépense avant son inclusion dans un bloc d'une chaîne de blocs de sortie de transaction non dépensée (UTXO) (10) qui émule une chaîne de blocs de modèle de compte, le procédé consistant à:
déterminer la présence d'un identifiant se rapportant à un compte dans une entrée de la transaction de dépense (400); et
valider la transaction de dépense (400) uniquement lorsque:
le même identifiant est également présent dans une sortie de la transaction de dépense (400); et
une seule sortie de la transaction de dépense (400) comprend un script de verrouillage qui requiert:
qu'un script de déverrouillage d'une transaction suivante fasse référence à l'identifiant; et
qu'une sortie de la transaction suivante comprenne l'identifiant;
l'identifiant comprenant un identifiant unique.
